# EUROPÄISCHE PATENTANMELDUNG

(11) **EP 4 130 538 A1**
(43) Veröffentlichungstag der Anmeldung: **08.02.2023**
(21) Anmeldenummer: 22180784.5
(22) Anmeldetag: 23.06.2022
(51) Int. Cl.: F16L 27/02

(54) **VERBINDUNGSELEMENT**

(30) Priorität: 04.08.2021 DE 102021120295
(71) Anmelder: VERITAS AG, 63571 Gelnhausen (DE)
(72) Erfinder: CÖL, Isa, 60385 Frankfurt (DE); HATTASS, Dirk, 63571 Gründau (DE); PAVILU, Dominik, 36381 Schlüchtern (DE)
(74) Vertreter: Patentship Patentanwaltsgesellschaft mbH

(57) **Zusammenfassung**

Die vorliegende Erfindung betrifft ein Verbindungselement (105) zum Herstellen einer Fluidverbindung mit zwei Fluidleitungen (101, 103), mit einer Außenhülse (107), welche eine erste Öffnung (109) zum Einführen einer ersten Fluidleitung (101) begrenzt, und welche eine der ersten Öffnung (109) abgewandte zweite Öffnung (111) zum Einführen einer zweiten Fluidleitung (103) begrenzt, und einer Innenhülse (113), welche innerhalb der Außenhülse (107) angeordnet ist, wobei die Innenhülse (113) einen sich in Richtung der ersten Öffnung (109) erstreckenden ersten Innenhülsenabschnitt (115) und einen sich in Richtung der zweiten Öffnung (111) erstreckenden zweiten Innenhülsenabschnitt (117) aufweist, wobei zwischen dem ersten Innenhülsenabschnitt (115) und der Außenhülse (107) eine erste Aufnahmeöffnung (119) zum Aufnehmen eines ersten Leitungsendes (101-1) der ersten Fluidleitung (101) geformt ist, und wobei zwischen dem zweiten Innenhülsenabschnitt (117) und der Außenhülse (107) eine zweite Aufnahmeöffnung (121) zum Aufnehmen eines zweiten Leitungsendes (103-1) der zweiten Fluidleitung (103) geformt ist, und wobei der erste und zweite Innenhülsenabschnitt (115, 117) ausgebildet sind, um eine Bewegung des jeweiligen ersten und zweiten Leitungsendes (101-1, 103-1) der jeweiligen ersten und zweiten Fluidleitung (101, 103) innerhalb der jeweiligen ersten und zweiten Aufnahmeöffnung (119, 121) zuzulassen.

## Beschreibung

Die vorliegende Erfindung betrifft ein Verbindungselement zum Herstellen einer Fluidverbindung mit zwei Fluidleitungen, sowie eine Fluidverbindungsanordnung umfassend ein Verbindungselement und eine erste und zweite Fluidleitung.

In einem herkömmlichen Fahrzeug wird eine Vielzahl von Fluidleitungen, wie z.B. Fluidrohre, benötigt, um unterschiedliche Arten von Fluid zu leiten. Insbesondere wird Ladeluft zu einem Verbrennungsmotor des Fahrzeugs durch als Ladeluftleitungen ausgebildete Fluidleitungen geführt. Aufgrund des räumlich begrenzten Bauraums eines Fahrzeuges werden entsprechende Fluidleitungen, insbesondere Ladeluftleitungen, oftmals in engen Biegeradien geführt und werden miteinander durch Verbindungselemente verbunden, welche eine fluiddichte Verbindung zwischen den verbundenen Fluidleitungen sicherstellen.

Aufgrund des räumlich begrenzten Bauraums des Fahrzeugs und der engen Biegeradien der Fluidleitungen, insbesondere Ladeluftleitungen, muss neben der wirksamen fluidtechnischen Abdichtung der fluidtechnischen Verbindung zwischen den Fluidleitungen innerhalb des jeweiligen Verbindungselements auch noch ein gewisser Toleranzausgleich zwischen den beiden Fluidleitungen ermöglicht werden.

Die Druckschrift EP 3 279 539 B1 offenbart eine Haltemanschette für eine Verbindungseinrichtung.

Es ist die der Erfindung zugrundeliegende Aufgabe, ein Verbindungselement und eine Fluidverbindungsanordnung für eine Fluidverbindung anzugeben, welches, bzw. welche vorteilhafte Eigenschaften aufweist und einfach zu fertigen ist.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Verbindungselement zum Herstellen einer Fluidverbindung mit zwei Fluidleitungen gelöst, mit einer Außenhülse, welche eine erste Öffnung zum Einführen einer ersten Fluidleitung begrenzt, und welche eine der ersten Öffnung abgewandte zweite Öffnung zum Einführen einer zweiten Fluidleitung begrenzt, und einer Innenhülse, welche innerhalb der Außenhülse angeordnet ist, wobei die Innenhülse einen sich in Richtung der ersten Öffnung erstreckenden ersten Innenhülsenabschnitt und einen sich in Richtung der zweiten Öffnung erstreckenden zweiten Innenhülsenabschnitt aufweist, wobei zwischen dem ersten Innenhülsenabschnitt und der Außenhülse eine erste Aufnahmeöffnung zum Aufnehmen eines ersten Leitungsendes der ersten Fluidleitung geformt ist, und wobei zwischen dem zweiten Innenhülsenabschnitt und der Außenhülse eine zweite Aufnahmeöffnung zum Aufnehmen eines zweiten Leitungsendes der zweiten Fluidleitung geformt ist, und wobei der erste und zweite Innenhülsenabschnitt ausgebildet sind, um eine Bewegung des jeweiligen ersten und zweiten Leitungsendes der jeweiligen ersten und zweiten Fluidleitung innerhalb der jeweiligen ersten und zweiten Aufnahmeöffnung zuzulassen.

Dadurch wird beispielsweise der technische Vorteil erreicht, dass durch das Verbindungselement eine stabile und insbesondere fluiddichte Verbindung zwischen der ersten und zweiten Fluidleitung sichergestellt wird, welche einfach zu montieren ist, und hohen Druckbelastungen vorteilhaft widerstehen kann, ohne dass Fluid austritt.

Insbesondere ist die Außenhülse ausgebildet, zumindest abschnittsweise das erste Leitungsende der ersten Fluidleitung und das zweite Leitungsende der zweiten Fluidleitung mit einer Kraft zu beaufschlagen, um das erste Leitungsende der ersten Fluidleitung gegen den ersten Innenhülsenabschnitt und das zweite Leitungsende der zweiten Fluidleitung gegen den zweiten Innenhülsenabschnitt zu pressen, so dass eine verliersichere Fixierung des ersten Leitungsendes der ersten Fluidleitung in der ersten Aufnahmeöffnung und eine verliersichere Fixierung des zweiten Leitungsendes der zweiten Fluidleitung in der zweiten Aufnahmeöffnung sichergestellt ist.

Insbesondere ist die Außenhülse ausgebildet, zumindest abschnittsweise formschlüssig an dem ersten Leitungsende der ersten Fluidleitung und an dem zweiten Leitungsende der zweiten Fluidleitung anzuliegen, wobei der erste Innenhülsenabschnitt insbesondere ausgebildet ist, zumindest abschnittsweise formschlüssig an dem ersten Leitungsende anzuliegen, und wobei der zweite Innenhülsenabschnitt insbesondere ausgebildet ist, zumindest abschnittsweise formschlüssig an dem zweiten Leitungsende anzuliegen, so dass eine verliersichere Fixierung des ersten Leitungsendes der ersten Fluidleitung in der ersten Aufnahmeöffnung und eine verliersichere Fixierung des zweiten Leitungsendes der zweiten Fluidleitung in der zweiten Aufnahmeöffnung sichergestellt ist.

Insbesondere ist an einer der Außenhülse zugewandten Außenseite des jeweiligen ersten und/oder zweiten Innenhülsenabschnitts zumindest ein Vorsprung angeordnet, welcher ausgebildet ist, an dem jeweiligen ersten, bzw. zweiten Leitungsende der ersten, zweiten Fluidleitung anzuliegen, um eine besonders stabile Befestigung des jeweiligen Leitungsendes innerhalb des Verbindungselements sicherzustellen.

Insbesondere ist an einer der Innenhülse zugewandten Innenseite der Außenhülse zumindest ein weiterer Vorsprung angeordnet, welcher ausgebildet ist, an dem jeweiligen ersten, bzw. zweiten Leitungsende der ersten, zweiten Fluidleitung anzuliegen, um eine besonders stabile Befestigung des jeweiligen Leitungsendes innerhalb des Verbindungselements sicherzustellen.

Zudem wird ein Toleranzausgleich zwischen der ersten und zweiten Fluidleitung dadurch sichergestellt, dass eine Bewegung des jeweiligen ersten, bzw. zweiten Leitungsendes der ersten, bzw. zweiten Fluidleitung innerhalb der jeweiligen ersten, bzw. zweiten Aufnahmeöffnung ermöglicht wird.

Die entsprechende Bewegung des jeweiligen ersten, bzw. zweiten Leitungsendes der ersten, bzw. zweiten Fluidleitung innerhalb der jeweiligen ersten, bzw. zweiten Aufnahmeöffnung wird insbesondere dadurch ermöglicht, dass der jeweilige erste, bzw. zweite Innenhülsenabschnitt der Innenhülse von der Außenhülse beabstandet innerhalb der Außenhülse angeordnet ist.

Die entsprechende Bewegung des jeweiligen ersten, bzw. zweiten Leitungsendes der ersten, bzw. zweiten Fluidleitung innerhalb der jeweiligen ersten, bzw. zweiten Aufnahmeöffnung wird insbesondere dadurch ermöglicht, dass der radiale Querschnitt von zumindest einem Bereich der jeweiligen ersten, bzw. zweiten Aufnahmeöffnung größer ist als der radiale Querschnitt des jeweiligen ersten Leitungsendes der ersten Fluidleitung, bzw. des jeweiligen zweiten Leitungsendes der zweiten Fluidleitung.

Insbesondere sind der erste und zweite Innenhülsenabschnitt ausgebildet, um eine Bewegung des jeweiligen ersten und zweiten Leitungsendes der jeweiligen ersten und zweiten Fluidleitung innerhalb der jeweiligen ersten und zweiten Aufnahmeöffnung entlang einer axialen Richtung der Verbindungselements zuzulassen, um eine Stauchung, bzw. Streckung der ersten und zweiten Fluidleitung innerhalb des Verbindungselements zu ermöglichen.

Insbesondere sind der erste und zweite Innenhülsenabschnitt ausgebildet, um ein Abwinkeln des jeweiligen ersten und zweiten Leitungsendes der jeweiligen ersten und zweiten Fluidleitung innerhalb der jeweiligen ersten und zweiten Aufnahmeöffnung zuzulassen, um zu ermöglichen, dass die jeweiligen axialen Erstreckungsachsen der ersten und zweiten Fluidleitung nicht mehr parallel zueinander verlaufen, sondern einen Winkel einschließen.

Insbesondere sind der erste und zweite Innenhülsenabschnitt ausgebildet, um eine Bewegung des jeweiligen ersten und zweiten Leitungsendes der jeweiligen ersten und zweiten Fluidleitung innerhalb der jeweiligen ersten und zweiten Aufnahmeöffnung entlang einer radialen Richtung des Verbindungselements zuzulassen, um einen Achsversatz der jeweiligen axialen Erstreckungsachsen der ersten und zweiten Fluidleitung zu ermöglichen.

Insbesondere kann die Bewegung des jeweiligen ersten und zweiten Leitungsendes der jeweiligen ersten und zweiten Fluidleitung innerhalb der jeweiligen ersten und zweiten Aufnahmeöffnung beliebige Kombinationen aus Bewegung entlang einer axialen Richtung des Verbindungselements, Bewegung entlang einer radialen Richtung des Verbindungselements und/oder Abwinkeln des jeweiligen ersten und zweiten Leitungsendes innerhalb der jeweiligen ersten und zweiten Aufnahmeöffnung umfassen.

Insbesondere verbinden die erste Öffnung und die zweite Öffnung der Außenhülse einen Innenraum der Außenhülse mit einem Außenraum der Außenhülse.

Insbesondere ist die Außenhülse als eine zumindest abschnittsweise umlaufende Außenhülse ausgebildet.

Insbesondere weist die Außenhülse einen konzentrischen Querschnitt, insbesondere einen kreisförmigen Querschnitt, auf. Insbesondere ist die Außenhülse als ein hohlzylinderförmiges Bauteil geformt, welches einen zylinderförmigen Innenraum der Außenhülse begrenzt.

Insbesondere ist die Außenhülse einteilig oder mehrteilig ausgebildet. Insbesondere umfasst eine mehrteilige Außenhülse eine Mehrzahl von, insbesondere zwei, Schalen, insbesondere Halbschalen, welche miteinander verbunden sind.

Insbesondere weist die Innenhülse eine weitere erste Öffnung auf, welche der ersten Öffnung der Außenhülse zugewandt ist und weist die Innenhülse eine weitere zweite Öffnung auf, welche der zweiten Öffnung der Außenhülse zugewandt ist.

Insbesondere begrenzt der erste Innenhülsenabschnitt, insbesondere ein erster Endabschnitt des ersten Innenhülsenabschnitts, die weitere erste Öffnung der Innenhülse. Insbesondere begrenzt der zweite Innenhülsenabschnitt, insbesondere ein zweiter Endabschnitt des zweiten Innenhülsenabschnitts, die weitere zweite Öffnung der Innenhülse.

Insbesondere weist die Innenhülse einen Innenhülsenmittenabschnitt auf, welcher zwischen dem ersten Innenhülsenabschnitt und dem zweiten Innenhülsenabschnitt angeordnet ist, wobei der Innenhülsenmittenabschnitt insbesondere mittig zwischen dem ersten Innenhülsenabschnitt und dem zweiten Innenhülsenabschnitt angeordnet ist.

Insbesondere verbinden die weitere erste Öffnung und die weitere zweite Öffnung der Innenhülse einen Innenraum der Innenhülse mit einem Außenraum der Innenhülse. Insbesondere umfasst der Außenraum der Innenhülse zumindest abschnittsweise den Innenraum der Außenhülse.

Insbesondere ist die Innenhülse als eine zumindest abschnittsweise umlaufende Innenhülse ausgebildet.

Insbesondere weist die Innenhülse einen konzentrischen Querschnitt, insbesondere einen kreisförmigen Querschnitt, auf. Insbesondere ist die Innenhülse als ein hohlzylinderförmiges Bauteil geformt, welches einen zylinderförmigen Innenraum der Innenhülse begrenzt.

Insbesondere ist die Innenhülse einteilig ausgebildet.

Insbesondere liegt die Innenhülse zumindest abschnittsweise an der Außenhülse an, insbesondere formschlüssig und/oder kraftschlüssig. Insbesondere liegt eine der Außenhülse zugewandte Außenseite der Innenhülse zumindest abschnittweise an einer der Innenhülse zugewandten Innenseite der Außenhülse an, insbesondere formschlüssig und/oder kraftschlüssig.

Insbesondere umfasst die erste und/oder zweite Fluidleitung einen Fluidschlauch oder ein Fluidrohr.

Insbesondere ist das erste Leitungsende der ersten Fluidleitung mit dem zweiten Leitungsende der zweiten Fluidleitung formschlüssig und/oder kraftschlüssig, insbesondere durch eine Verrastung, oder stoffschlüssig, insbesondere durch eine Verschweißung, verbunden, insbesondere innerhalb der Innenhülse.

Insbesondere ist zwischen dem ersten Leitungsende der ersten Fluidleitung und dem zweiten Leitungsende der zweiten Fluidleitung zumindest eine Leitungsdichtung angeordnet, welche ausgebildet ist, das erste und zweite Leitungsende fluiddicht miteinander zu verbinden, wobei die zumindest eine Leitungsdichtung insbesondere innerhalb der Innenhülse angeordnet ist, und/oder wobei die zumindest eine Leitungsdichtung an das erste und/oder zweite Leitungsende angespritzt ist, und insbesondere mit dem ersten und zweiten Leitungsende als ein Zweikomponenten-Spritzgussbauteil geformt ist. Insbesondere ist eine erste Leitungsdichtung an dem ersten Leitungsende und ist eine zweite Leitungsdichtung an dem zweiten Leitungsende angeordnet.

Die Vorteile des Verbindungselements, bzw. der Fluidverbindungsanordnung gemäß der vorliegenden Offenbarung zeichnen sich dadurch aus, dass neben der fluidtechnischen Abdichtung zwischen den jeweiligen ersten und zweiten Leitungsenden der jeweiligen ersten und zweiten Fluidleitung innerhalb des Verbindungselements auch noch durch die Bewegung des jeweiligen ersten, bzw. zweiten Leitungsendes innerhalb der jeweiligen ersten, bzw. zweiten Aufnahmeöffnung ein wirksamer Toleranzausgleich sichergestellt werden kann.

In einer vorteilhaften Ausführungsform weist die Außenhülse einen Mittenabschnitt auf, welcher zwischen der ersten und zweiten Öffnung angeordnet ist, wobei sich der Mittenabschnitt insbesondere zumindest abschnittsweise parallel zum ersten und zweiten Innenhülsenabschnitt erstreckt, wobei die erste Aufnahmeöffnung zwischen dem Mittenabschnitt und dem ersten Innenhülsenabschnitt angeordnet ist, und wobei die zweite Aufnahmeöffnung zwischen dem Mittenabschnitt und dem zweiten Innenhülsenabschnitt angeordnet ist.

Dadurch wird der technische Vorteil erreicht, dass eine besonders wirksame Aufnahme des jeweiligen ersten, bzw. zweiten Leitungsendes der ersten, bzw. zweiten Fluidleitung in der ersten, bzw. zweiten Aufnahmeöffnung sichergestellt wird.

Insbesondere ist der Mittenabschnitt ausgebildet, zumindest abschnittsweise an dem ersten Leitungsende der ersten Fluidleitung und zumindest abschnittsweise an dem zweiten Leitungsende der zweiten Fluidleitung anzuliegen.

Insbesondere ist der erste Innenhülsenabschnitt ausgebildet, zumindest abschnittweise an dem ersten Leitungsende der ersten Fluidleitung anzuliegen und insbesondere ist der zweite Innenhülsenabschnitt ausgebildet, zumindest abschnittweise an dem zweiten Leitungsende der zweiten Fluidleitung anzuliegen.

Die Anlagefläche des Mittenabschnitts an dem jeweiligen ersten, bzw. zweiten Leitungsende, bzw. die weitere Anlagefläche des ersten Innenhülsenabschnitts an dem ersten Leitungsende, bzw. die weitere Anlagefläche des zweiten Innenhülsenabschnitts an dem zweiten Leitungsende stellt eine wirksame Halterung des jeweiligen ersten, bzw. zweiten Leitungsendes innerhalb der jeweiligen ersten, bzw. zweiten Aufnahmeöffnung sicher.

In einer vorteilhaften Ausführungsform weist die Außenhülse einen Mittenabschnitt auf, welcher zwischen der ersten und zweiten Öffnung angeordnet ist, wobei sich die Außenhülse von dem Mittenabschnitt aus in Richtung zu der ersten Öffnung verjüngt, so dass ein erster verjüngter Abschnitt der Außenhülse ausgebildet ist, an einem ersten gekrümmten Abschnitt der ersten Fluidleitung anzuliegen, und wobei sich die Außenhülse von dem Mittenabschnitt aus in Richtung zu der zweiten Öffnung verjüngt, so dass ein zweiter verjüngter Abschnitt der Außenhülse ausgebildet ist, an einem zweiten gekrümmten Abschnitt der zweiten Fluidleitung anzuliegen.

Dadurch wird beispielsweise der technische Vorteil erreicht, dass die jeweiligen verjüngten Abschnitte der Außenhülse sicherstellen, dass das erste Leitungsende der ersten Fluidleitung nicht aus der ersten Aufnahmeöffnung herausgezogen werden kann, und dass das zweite Leitungsende der zweiten Fluidleitung nicht aus der zweiten Aufnahmeöffnung herausgezogen werden kann.

Insbesondere ist der erste verjüngte Abschnitt der Außenhülse ausgebildet an dem ersten gekrümmten Abschnitt der ersten Fluidleitung anzuliegen, insbesondere formschlüssig und/oder kraftschlüssig anzuliegen.

Insbesondere ist der zweite verjüngte Abschnitt der Außenhülse ausgebildet an dem zweiten gekrümmten Abschnitt der zweiten Fluidleitung anzuliegen, insbesondere formschlüssig und/oder kraftschlüssig anzuliegen.

Insbesondere reduziert sich der Innendurchmesser des jeweiligen ersten und/oder zweiten verjüngte Abschnitts der Außenhülse von einem Durchmesser des Mittenabschnitts der Außenhülse zu einem geringeren Durchmesser der jeweiligen ersten und/oder zweiten Öffnung der Außenhülse.

In einer vorteilhaften Ausführungsform ist ein erster verjüngter Abschnitt der Außenhülse ausgebildet ist, an einem ersten winkligen Abschnitt der ersten Fluidleitung anzuliegen, und ist ein zweiter verjüngter Abschnitt der Außenhülse ausgebildet ist, an einem zweiten winkligen Abschnitt der zweiten Fluidleitung anzuliegen.

Dadurch wird beispielsweise der technische Vorteil erreicht, dass die sich verjüngenden Abschnitte der Außenhülse ebenso eine wirksame Fixierung des jeweiligen winkligen Abschnitts der erste, bzw. zweiten Fluidleitung sicherstellen.

Insbesondere ist der erste, bzw. zweite winklige Abschnitt der ersten, bzw. zweiten Fluidleitung durch einen sich gegenüber einer Erstreckungsrichtung der ersten, bzw. zweiten Fluidleitungen schräg erstreckenden Versatz gebildet, welcher insbesondere in das jeweilige erste, bzw. zweite Leitungsende übergeht. Insbesondere schließt der erste bzw. zweite winklige Abschnitt gegenüber dem jeweiligen ersten, bzw. zweiten Leitungsende einen Winkel zwischen 30° und 60° ein, insbesondere von 45°. Insbesondere schließt der erste bzw. zweite winklige Abschnitt gegenüber einem jeweiligen Hauptabschnitt der ersten, bzw. zweiten Fluidleitung einen Winkel zwischen 30° und 60° ein, insbesondere von 45°.

In einer vorteilhaften Ausführungsform erstreckt sich das jeweilige erste und zweite Leitungsende parallel und ohne radialen Versatz gegenüber der jeweiligen ersten und zweiten Fluidleitung, wobei an dem ersten und zweiten Leitungsende jeweils eine Mehrzahl von Rippen angeordnet sind, welche jeweils an einem ersten und zweiten verjüngten Abschnitt der Außenhülse anliegen, um eine Aufnahme des ersten Leitungsende in der ersten Aufnahmeöffnung und eine Aufnahme des zweiten Leitungsendes in der zweiten Aufnahmeöffnung sicherzustellen.

In einer vorteilhaften Ausführungsform weist die Außenhülse einen ersten Öffnungsrand auf, welcher die erste Öffnung begrenzt, und weist die Außenhülse einen zweiten Öffnungsrand auf, welcher die zweite Öffnung begrenzt, und wobei insbesondere ein Durchmesser des ersten und zweiten Öffnungsrands geringer als ein Durchmesser eines Mittenabschnitts der Außenhülse ist.

Dadurch wird beispielsweise der technische Vorteil erreicht, dass durch den gegenüber dem Durchmesser des Mittenabschnitts der Außenhülse reduzierten Durchmesser des ersten und zweiten Öffnungsrands eine wirksame Fixierung der jeweiligen durch die erste, bzw. zweite Öffnung geführten ersten, bzw. zweiten Fluidleitung innerhalb des Verbindungselements sichergestellt wird.

In einer vorteilhaften Ausführungsform weist die Innenhülse ein Abstandselement auf, welches an einer der Außenhülse zugewandten Außenseite der Innenhülse angeordnet ist, wobei das Abstandselement in eine Vertiefung der Außenhülse eingreift, welche an einer der Innenhülse zugewandten Innenseite der Außenhülse angeordnet ist, um eine Beabstandung zwischen der Innenhülse und der Außenhülse sicherzustellen, wobei sich das Abstandselement insbesondere winklig, insbesondere rechtwinklig, zu der Außenhülse, dem ersten und zweiten Innenhülsenabschnitt erstreckt.

Dadurch wird beispielsweise der technische Vorteil erreicht, dass das Abstandelement eine Beabstandung zwischen der Innenhülse und der Außenhülse und damit eine zur Aufnahme des jeweiligen ersten, bzw. zweiten Leitungsendes der jeweiligen ersten, bzw. zweiten Fluidleitung ausreichende radiale Breite der jeweiligen ersten, bzw. zweiten Aufnahmeöffnung zwischen dem jeweiligen ersten, bzw. zweiten Innenhülsenabschnitt und der Außenhülse ermöglicht.

Insbesondere die winklige, insbesondere rechtwinklige, Erstreckung des Abstandselements zu der Erstreckung der Außenhülse, des ersten Innenhülsenabschnitts und des zweiten Innenhülsenabschnitts stellt eine wirksame Beabstandung von Innenhülse und Außenhülse sicher.

Insbesondere ist das Abstandselement nicht an dem ersten und zweiten Innenhülsenabschnitt der Innenhülse angeordnet.

Insbesondere weist die Innenhülse einen Innenhülsenmittenabschnitt auf, welcher zwischen dem ersten Innenhülsenabschnitt und dem zweiten Innenhülsenabschnitt angeordnet ist, wobei der Innenhülsenmittenabschnitt insbesondere mittig zwischen dem ersten Innenhülsenabschnitt und dem zweiten Innenhülsenabschnitt angeordnet ist, wobei das Abstandselement an dem Innenhülsenmittenabschnitt angeordnet ist.

Insbesondere umläuft das Abstandselement die Außenseite der Innenhülse, insbesondere den Innenhülsenmittenabschnitt zumindest abschnittsweise, insbesondere vollständig.

Insbesondere ist das Abstandselement als eine Rippe oder als ein Wulst geformt.

Insbesondere weist die Außenhülse einen Mittenabschnitt auf, welcher zwischen der ersten und zweiten Öffnung angeordnet ist, wobei die Vertiefung an dem Mittenabschnitt angeordnet ist.

Insbesondere ist die Vertiefung komplementär zum Abstandselement ausgebildet.

Insbesondere umläuft die Vertiefung die Innenseite der Außenhülse, insbesondere den Mittenabschnitt der Außenhülse zumindest abschnittsweise, insbesondere vollständig.

Insbesondere ist die Vertiefung als eine Nut geformt, welche ausgebildet ist, das Abstandselement aufzunehmen.

Insbesondere ist die Vertiefung der Außenhülse ausgebildet, das Abstandselement der Innenhülse mit einer Kraft zu beaufschlagen, um eine kraftschlüssige Verbindung zwischen der Innenhülse und der Außenhülse sicherzustellen. Insbesondere ist die Vertiefung der Außenhülse ausgebildet, an dem Abstandselement der Innenhülse formschlüssig anzuliegen, um eine formschlüssige Verbindung zwischen Innenhülse und Außenhülse sicherzustellen.

Insbesondere ist an einer der Innenhülse abgewandten Außenseite der Außenhülse ein sich komplementär zu der Vertiefung erstreckender Außenwulst geformt.

In einer vorteilhaften Ausführungsform ist der erste Innenhülsenabschnitt, insbesondere ein der ersten Öffnung zugewandter erster Endabschnitt des ersten Innenhülsenabschnitts, von der ersten Öffnung beabstandet, und/oder ist der zweite Innenhülsenabschnitt, insbesondere ein der zweiten Öffnung zugewandter zweiter Endabschnitt des zweiten Innenhülsenabschnitts, von der zweiten Öffnung beabstandet.

Dadurch wird beispielsweise der technische Vorteil erreicht, dass durch die Beabstandung des jeweiligen Innenhülsenabschnitts, insbesondere des jeweiligen Endabschnitts, der Innenhülse von der jeweiligen Öffnung der Außenhülse sichergestellt werden kann, dass das jeweilige Leitungsende der jeweiligen Fluidleitung wirksam durch die jeweilige Öffnung der Außenhülse in die jeweilige Aufnahmeöffnung zwischen der Außenhülse und der Innenhülse eingeführt werden kann.

In einer vorteilhaften Ausführungsform ist an dem ersten Innenhülsenabschnitt, insbesondere an einem der ersten Öffnung zugewandten ersten Endabschnitt des ersten Innenhülsenabschnitts eine erste Aufnahme zum Aufnehmen eines ersten Dichtelements, insbesondere O-Ring, angeordnet, und/oder ist an dem zweiten Innenhülsenabschnitt, insbesondere an einem der zweiten Öffnung zugewandten zweiten Endabschnitt des zweiten Innenhülsenabschnitts, eine zweite Aufnahme zum Aufnehmen eines zweiten Dichtelements, insbesondere O-Ring, angeordnet.

Dadurch wird beispielsweise der technische Vorteil erreicht, dass das in der jeweiligen Aufnahme aufgenommene jeweilige Dichtelement, insbesondere O-Ring, eine wirksame fluidtechnische Abdichtung zwischen der Innenhülse und jeweiligen Fluidleitung sicherstellt.

Insbesondere weist die Innenhülse das erste Dichtelement, insbesondere O-Ring, auf, welches in der ersten Aufnahme aufgenommen ist, und weist die Innenhülse das zweite Dichtelement, insbesondere O-Ring, auf, welches in der zweiten Aufnahme aufgenommen ist.

Insbesondere ist die Innenhülse zusammen mit dem ersten und zweiten Dichtelement als ein Mehrkomponenten-Spritzgussformteil, insbesondere Zweikomponenten-Spritzgussformteil, geformt.

Insbesondere liegt das in der ersten Aufnahme aufgenommene erste Dichtelement an dem ersten Leitungsende der ersten Fluidleitung an, und liegt das in der zweiten Aufnahme aufgenommene zweite Dichtelement an dem zweiten Leitungsende der zweiten Fluidleitung an, um eine fluidtechnische Abdichtung zwischen dem jeweiligen Dichtelement und dem jeweiligen Leitungsende der jeweiligen Fluidleitung sicherzustellen.

Insbesondere begrenzt die erste Aufnahme eine weitere erste Öffnung der Innenhülse und begrenzt die zweite Aufnahme eine weitere zweite Öffnung der Innenhülse.

In einer vorteilhaften Ausführungsform ist die erste und/oder zweite Aufnahme jeweils durch zumindest eine den ersten und/oder zweiten Endabschnitt zumindest abschnittsweise umlaufende Rippe begrenzt, oder ist die erste und/oder zweite Aufnahme jeweils als eine Nut geformt.

Dadurch wird beispielsweise der technische Vorteil erreicht, dass in eine als Nut ausgebildete jeweilige Aufnahme der Innenhülse das jeweilige Dichtelement wirksam aufgenommen werden kann, bzw. dass die jeweilige zumindest eine Rippe eine laterale Begrenzung der Aufnahme sicherstellt, so dass das in der jeweiligen Aufnahme aufgenommen jeweilige Dichtelement nicht aus der Aufnahme herausrutschen kann.

Insbesondere weist die jeweilige Aufnahme jeweils zwei Rippen auf, welche die jeweilige Aufnahme lateral begrenzen, um ein Herausrutschen des jeweiligen Dichtelements aus der jeweiligen Aufnahme zu vermeiden.

In einer vorteilhaften Ausführungsform ist die Außenhülse mehrteilig ausgebildet.

Dadurch wird beispielsweise der technische Vorteil erreicht, dass ein wirksamer Zusammenbau des Verbindungselements ermöglich wird.

Insbesondere kann zuerst die Innenhülse bereitgestellt werden, können anschließend die jeweiligen Leitungsenden der jeweiligen Fluidleitungen auf die jeweiligen Innenhülsenabschnitte der Innenhülse aufgeschoben werden, und können anschließend die Mehrzahl von Teilen der mehrteilige Außenhülse auf die jeweiligen Leitungsenden aufgebracht und miteinander verbunden werden, um die resultierende Fluidverbindungsanordnung zu formen.

In einer vorteilhaften Ausführungsform umfasst die Außenhülse eine erste Außenhülsenhälfte und eine zweite Außenhülsenhälfte, wobei die erste und zweite Außenhülsenhälfte insbesondere lösbar, insbesondere durch eine Rastverbindung, miteinander verbunden sind, um die Außenhülse zu formen.

Dadurch wird beispielsweise der technische Vorteil erreicht, dass die beiden Außenhülsenhälften wirksam auf die jeweiligen Leitungsenden der jeweiligen Fluidleitungen aufgebracht und anschließend miteinander verbunden werden, um eine wirksame Befestigung der Außenhülse sicherzustellen.

Insbesondere sind die miteinander verbundenen Außenhälften ausgebildet die Außenhülse formschlüssig und/oder kraftschlüssig auf den jeweiligen Leitungsenden der jeweiligen Fluidleitungen zu befestigen.

Insbesondere stellt die Rastverbindung zwischen der erste und zweite Außenhülsenhälfte eine effiziente Montage der Außenhülse durch ein einfaches Verrasten der ersten und zweiten Außenhülsenhälfte sicher.

Insbesondere sind die erste und zweite Außenhülsenhälfte lösbar miteinander verbunden, so dass, z.B. durch ein geeignetes Werkzeug, bei einer Demontage des Verbindungselements, bzw. der Fluidverbindungsanordnung, die einzelnen Bauteile vorteilhaft voneinander getrennt werden können.

In einer vorteilhaften Ausführungsform weist die erste und/oder zweite Außenhülsenhälfte zumindest einen Rasthaken auf, welcher in eine Einführöffnung der zweiten und/oder ersten Außenhülsenhälfte eingreift, um die erste und zweite Außenhülsenhälfte rastend miteinander zu verbinden; oder weist das Verbindungselement ein Halteelement auf, wobei das Halteelement eine Mehrzahl von Rastarmen aufweist, welche in Hinterschneidungen der ersten und/oder zweiten Außenhülsenhälfte eingreifen, um die erste und zweite Außenhülsenhälften rastend miteinander zu verbinden.

Dadurch wird beispielsweise der technische Vorteil erreicht, dass eine effizient zu fertigende Verrastung zwischen den beiden Außenhülsenhälften sichergestellt werden kann.

Insbesondere weist die erste und/oder zweite Außenhülsenhälfte eine Mehrzahl von Rasthaken und weist die zweite und/oder erste Außenhülsenhälfte eine Mehrzahl von Einführöffnungen auf, wobei jeweils ein Rasthaken der Mehrzahl von Rasthaken in jeweils eine Einführöffnung der Mehrzahl von Einführöffnungen eingreift.

Insbesondere wird die jeweilige Einführöffnung jeweils durch einen Einführöffnungsrand begrenzt, wobei jeweils ein Rastvorsprung des jeweiligen Rasthakens den jeweiligen Einführöffnungsrand hintergreift, um eine wirksame Verrastung sicherzustellen.

Insbesondere weist die erste Außenhülsenhälfte an einem ersten Außenhülsenrand zumindest einen, insbesondere vier, Rasthaken auf, weist die erste Außenhülsenhälfte an einem dem ersten Außenhülsenrand abgewandten zweiten Außenhülsenrand zumindest eine, insbesondere vier, Einführöffnungen auf, weist die zweite Außenhülsenhälfte an einem dritten Außenhülsenrand zumindest einen, insbesondere vier, weitere Rasthaken auf, und weist die zweite Außenhülsenhälfte an einem dem dritten Außenhülsenrand abgewandten vierten Außenhülsenrand zumindest eine, insbesondere vier, weitere Einführöffnungen auf.

Hierbei greift insbesondere der zumindest eine an dem ersten Außenhülsenrand der ersten Außenhülsenhälfte angeordnete Rasthaken in die zumindest eine an dem vierten Außenhülsenrand der zweiten Außenhülsenhälfte angeordnete weitere Einführöffnung ein. Hierbei greift insbesondere der zumindest eine an dem dritten Außenhülsenrand der zweiten Außenhülsenhälfte angeordnete weitere Rasthaken in die zumindest eine an dem zweiten Außenhülsenrand der ersten Außenhülsenhälfte angeordnete Einführöffnung ein, um eine wechselseitige Verrastung sich den beiden Außenhülsenhälften sicherzustellen.

Alternativ kann die rastende Verbindung zwischen der ersten Außenhülsenhälfte und der zweiten Außenhülsenhälfte auch durch ein Halteelement mit einer Mehrzahl von Rastarmen erreicht werden.

Insbesondere weist das Halteelement erste Rastarme, insbesondere ein Paar von gegenüberliegenden ersten Rastarmen, und zweite Rastarme, insbesondere ein Paar von gegenüberliegenden zweiten Rastarmen, auf, wobei die ersten und zweiten Rastarme insbesondere an gegenüberliegenden Seiten eines Stegelements des Halteelements angeordnet sind.

Die ersten Rastarme greifen hierbei insbesondere in erste Hinterschneidungen einer Außenkontur der ersten Außenhülsenhälfte ein und die zweiten Rastarme greifen hierbei insbesondere in zweite Hinterschneidungen einer Außenkontur der zweiten Außenhülsenhälfte ein, um eine wirksame Verrastung zwischen dem Halteelement und dem Verbindungselement zu erreichen.

Die Außenkontur des Verbindungselements kann hierbei Stege umfassen, welche insbesondere die beiden Außenhülsenhälften umlaufen. Hierbei weisen die Stege der Außenkontur an einander gegenüberliegenden Seiten des Halteelements erste Hinterschneidungen und zweite Hinterschneidungen auf.

Die Außenkontur des Verbindungselements kann eine Vielzahl von Positionierungsvorsprüngen aufweisen, welche insbesondere in einem Kontaktbereich zwischen einem ersten Außenhülsenrand der ersten Außenhülsenhälfte und einem zweiten Außenhülsenrand der zweiten Außenhülsenhälfte angeordnet sind. Hierbei sind die Positionierungsvorsprünge der Außenkontur des Verbindungselements insbesondere in entsprechende Positionierungsöffnungen des Halteelements eingeführt, um das Halteelement im Bereich der beiden Außenhülsenränder an dem Verbindungselement zu positionieren.

In einer vorteilhaften Ausführungsform ist an einem der ersten Öffnung zugewandten ersten Endabschnitt des ersten Innenhülsenabschnitts ein erster Anschlag geformt, welcher ausgebildet ist, um an einem ersten Gegenanschlag der ersten Fluidleitung anzuliegen und ein Einführen des ersten Leitungsendes der ersten Fluidleitung in die erste Aufnahmeöffnung zu begrenzen, und/oder ist an einem der zweiten Öffnung zugewandten zweiten Endabschnitt des zweiten Innenhülsenabschnitts ein zweiter Anschlag geformt, welcher ausgebildet ist, um an einem zweiten Gegenanschlag der zweiten Fluidleitung anzuliegen und ein Einführen des zweiten Leitungsendes der zweiten Fluidleitung in die zweite Aufnahmeöffnung zu begrenzen.

Dadurch wird beispielsweise der technische Vorteil erreicht, dass durch das Anliegen des jeweiligen Gegenanschlags der jeweiligen Fluidleitung an dem jeweiligen Anschlag des jeweiligen Endabschnitts des jeweiligen Innenhülsenabschnitts eine wirksame Einschubbegrenzung der jeweiligen Fluidleitung in das Verbindungselement sichergestellt wird.

Insbesondere kann alternativ und zusätzlich eine Einschubbegrenzung der jeweiligen Fluidleitung in das Verbindungselement dadurch erreicht werden, dass das jeweilige Leitungsende der jeweiligen Fluidleitung an einem Anschlagelement, welches insbesondere zwischen dem ersten und zweiten Innenhülsenabschnitt angeordnet ist, anliegt.

In einer vorteilhaften Ausführungsform weist die Außenhülse, insbesondere die erste und/oder zweite Außenhülsenhälfte eine Mehrzahl von Stützrippen auf, wobei sich die Stützrippen insbesondere entlang einer Längsrichtung und/oder Umfangsrichtung der Außenhülse, insbesondere der ersten und/oder zweiten Außenhülsenhälfte, erstrecken.

Dadurch wird beispielsweise der technische Vorteil erreicht, dass durch die Verwendung der Stützrippen die Dicke und damit das Gewicht der Außenhülse vorteilhaft reduziert werden kann, ohne dass hierbei Einschränkungen in Bezug auf die Stabilität der Außenhülse auftreten.

Gemäß einem zweiten Aspekt der Erfindung wird die Aufgabe durch eine Fluidverbindungsanordnung gelöst, umfassend ein Verbindungselement nach dem ersten Aspekt, eine erste Fluidleitung und eine zweite Fluidleitung, wobei ein erstes Leitungsende der ersten Fluidleitung in der ersten Aufnahmeöffnung bewegbar aufgenommen ist, wobei ein zweites Leitungsende der zweiten Fluidleitung in der zweiten Aufnahmeöffnung bewegbar aufgenommen ist, um einen Toleranzausgleich zwischen der ersten und zweiten Fluidleitung sicherzustellen.

Dadurch wird beispielsweise der technische Vorteil erreicht, dass eine wirksame fluiddichte Verbindung zwischen der ersten und zweiten Fluidleitung mit einem wirksamen Toleranzausgleich sichergestellt werden kann.

Die Verbindung zwischen der ersten und zweiten Fluidleitung ist insbesondere als eine fluiddichte Verbindung ausgebildet, so dass durch die erste und zweite Fluidleitung strömendes Fluid nicht aus dem Verbindungselement, insbesondere nicht aus der Aufnahmeöffnung, austreten kann.

Insbesondere umfasst die Verbindung zwischen der ersten und zweiten Fluidleitung eine nichtlösbare Verbindung zwischen der ersten und zweiten Fluidleitung, welche nur durch eine Beschädigung der Fluidverbindungsanordnung, insbesondere durch ein Aufbrechen des Verbindungselements wieder gelöst werden kann.

Insbesondere umfasst die Verbindung zwischen der ersten und zweiten Fluidleitung eine lösbare Verbindung zwischen der ersten und zweiten Fluidleitung, welche wieder gelöst werden kann, insbesondere durch ein Öffnen der Außenhülse des Verbindungselements, beispielsweise durch ein geeignetes Werkzeug.

Die Bewegbarkeit des jeweiligen Leitungsendes der jeweiligen Fluidleitung in die jeweilige Aufnahmeöffnung der Innenhülse stellt einen wirksamen Toleranzausgleich zwischen der ersten und zweiten Fluidleitung sicher.

Hierbei ist festzustellen, dass trotz der Bewegbarkeit die jeweiligen Leitungsenden innerhalb der jeweiligen Aufnahmeöffnung, dennoch die jeweiligen Leitungsenden durch das Anliegen der Außenhülse an den jeweiligen Leitungsenden nicht einfach aus der jeweiligen Aufnahmeöffnung herausgezogen werden können, so dass eine feste Verbindung zwischen der jeweiligen Leitungsenden und dem Verbindungselement sichergestellt ist.

In einer vorteilhaften Ausführungsform ist das jeweilige Leitungsende der jeweiligen Fluidleitung innerhalb der jeweiligen Aufnahmeöffnung entlang einer axialen Richtung der Verbindungselements bewegbar aufgenommen, um ein Strecken und Stauchen der Fluidverbindungsanordnung zu ermöglichen, und/oder ist das jeweilige Leitungsende der jeweiligen Fluidleitung innerhalb der jeweiligen Aufnahmeöffnung entlang einer radialen Richtung der Verbindungselements bewegbar aufgenommen, um einen Achsversatz zwischen der ersten und zweiten Fluidleitung zu ermöglichen, und/oder ist das jeweilige Leitungsende der jeweiligen Fluidleitung innerhalb der jeweiligen Aufnahmeöffnung abwinkelbar angeordnet, um zu ermöglichen, dass die jeweiligen axialen Erstreckungsachsen der ersten und zweiten Fluidleitung winklig zueinander verlaufen.

Die in Bezug auf das Verbindungselement gemäß dem ersten Aspekt angeführten vorteilhaften Ausführungsformen gelten ebenso als vorteilhafte Ausführungsformen der Fluidverbindungsanordnung gemäß dem zweiten Aspekt.

Ebenso gelten die vorteilhafte Ausführungsformen der Fluidverbindungsanordnung gemäß dem zweiten Aspekt als vorteilhaften Ausführungsformen für das Verbindungselement gemäß dem ersten Aspekt.

Ausführungsbeispiele der Erfindung sind in den Zeichnungen dargestellt und werden im Folgenden näher beschrieben.

Es zeigen:
- Fig. 1: eine perspektivische Ansicht einer Fluidverbindungsanordnung gemäß einer Ausführungsform;
- Fig. 2: eine weitere perspektivische Ansicht der in Fig. 1 dargestellten Fluidverbindungsanordnung;
- Fig. 3: eine weitere perspektivische Ansicht der in Fig. 1 dargestellten Fluidverbindungsanordnung in einem gestauchten Zustand;
- Fig. 4: eine weitere perspektivische Ansicht der in Fig. 1 dargestellten Fluidverbindungsanordnung in einem gestreckten und abgewinkelten Zustand;
- Fig. 5: eine weitere perspektivische Ansicht der in Fig. 1 dargestellten Fluidverbindungsanordnung in einem gestauchten und abgewinkelten Zustand;
- Fig. 6: eine weitere perspektivische Ansicht der in Fig. 1 dargestellten Fluidverbindungsanordnung mit einem Achsversatz der Fluidleitungen;
- Fig. 7: eine perspektivische Ansicht einer Fluidverbindungsanordnung gemäß einer weiteren Ausführungsform;
- Fig. 8: eine perspektivische Ansicht eines Verbindungselements der in Fig. 1 dargestellten Fluidverbindungsanordnung;
- Fig. 9: eine perspektivische Ansicht eines Verbindungselements gemäß einer weiteren Ausführungsform; und
- Fig. 10: eine perspektivische Ansicht eines Verbindungselements gemäß einer weiteren Ausführungsform;
- Fig. 11: eine perspektivische Ansicht eines Halteelements des in Fig. 10 dargestellten Verbindungselements;
- Fig. 12: eine perspektivische Ansicht einer Rastverbindung des in Fig. 10 dargestellten Verbindungselements;
- Fig. 13: eine weitere perspektivische Ansicht des in Fig. 10 dargestellten Verbindungselements ohne Halteelement; und
- Fig. 14: eine weitere perspektivische Ansicht des in Fig. 13 dargestellten Verbindungselements mit zwei Halteelementen.

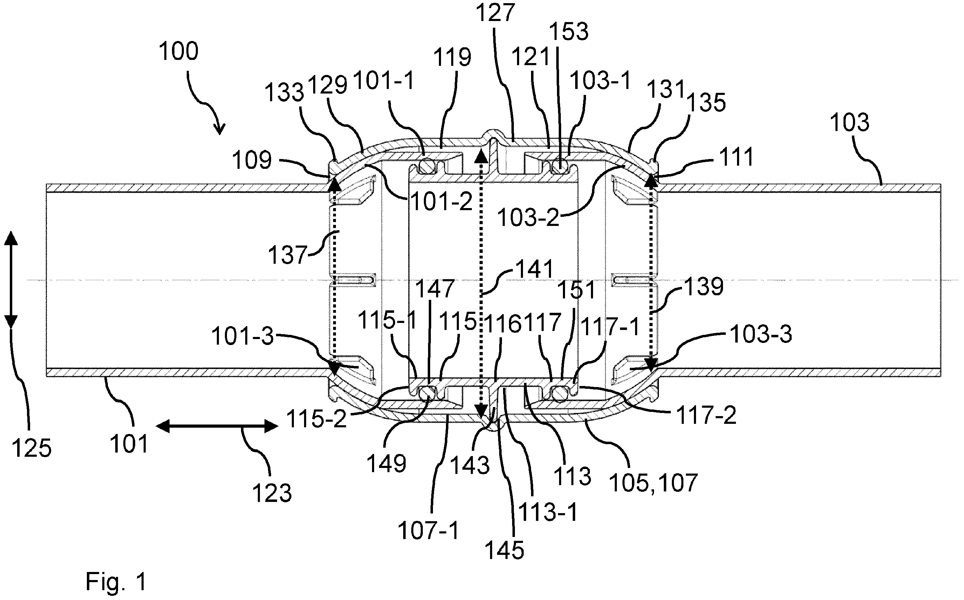

Die Fig. 1 zeigt eine perspektivische Ansicht einer Fluidverbindungsanordnung 100 umfassend eine erste Fluidleitung 101, eine zweiten Fluidleitung 103, sowie ein Verbindungselement 105 zum Herstellen einer Fluidverbindung mit der ersten und zweiten Fluidleitung 101, 103. In der Fig. 1 ist eine Schnittdarstellung der Fluidverbindungsanordnung 100 gezeigt.

Die Fluidverbindungsanordnung 100 gemäß der vorliegenden Offenbarung dient zum Herstellen einer Fluidverbindung in einer Vielzahl von fluidführenden Systemen eines Fahrzeuges. Das Fluidverbindungsanordnung 100 kann zur fluidtechnischen Verbindung von Kraftstoff-, Kühlflüssigkeits-, Ladeluft-, Bremsflüssigkeits-, Wasser-, SCR-, und/oder Getriebeölleitungen in Fahrzeugen eingesetzt werden. Das Fluidverbindungsanordnung 100 kann alternativ auch beispielsweise in Kühlmittel-führenden Fluidleitungen 101, 103, welche zur Kühlung von Batteriezellen in einem elektrisch angetriebenen Fahrzeug verwendet werden, eingesetzt werden.

In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch fluidtechnische Schnittstellen miteinander verbunden werden, um eine wirksame Leitung von Fluid sicherzustellen. Hierbei werden an die fluidtechnischen Schnittstellen zwischen einer entsprechenden fluidführenden Leitung und einem entsprechenden Verbindungselement hohe Anforderungen in Bezug auf Stabilität und Fluiddichtigkeit gestellt.

Insbesondere sind gemäß der in Fig. 1 dargestellten Ausführungsform die erste und zweite Fluidleitung 101, 103 als Ladeluftleitungen zum Führen von Ladeluft ausgebildet, und dient das Verbindungselement 105 zum Herstellen einer fluiddichten, insbesondere gasdichten, Verbindung zwischen den Fluidleitungen 101, 103.

Das Verbindungselement 105 umfasst eine Außenhülse 107, welche eine erste Öffnung 109 zum Einführen der ersten Fluidleitung 101 begrenzt, und welche eine der ersten Öffnung 109 abgewandte zweite Öffnung 111 zum Einführen der zweiten Fluidleitung 103 begrenzt.

Das Verbindungselement 105 umfasst ferner eine Innenhülse 113, welche innerhalb der Außenhülse 107 angeordnet ist. Die Innenhülse 113 weist einen sich in Richtung der ersten Öffnung 109 erstreckenden ersten Innenhülsenabschnitt 115 und einen sich in Richtung der zweiten Öffnung 111 erstreckenden zweiten Innenhülsenabschnitt 117 auf.

Zwischen dem ersten Innenhülsenabschnitt 115 und der Außenhülse 107 ist eine erste umlaufende Aufnahmeöffnung 119 zum Aufnehmen eines ersten Leitungsendes 101-1 der ersten Fluidleitung 101 geformt. Zwischen dem zweiten Innenhülsenabschnitt 117 und der Außenhülse 107 ist eine zweite umlaufende Aufnahmeöffnung 121 zum Aufnehmen eines zweiten Leitungsendes 103-1 der zweiten Fluidleitung 103 geformt.

Wie aus der Fig. 1 lediglich schematisch hervorgeht, sind der erste und zweite Innenhülsenabschnitt 115, 117 ausgebildet, um eine Bewegung des jeweiligen ersten und zweiten Leitungsendes 101-1, 103-1 der jeweiligen ersten und zweiten Fluidleitung 101, 103 innerhalb der jeweiligen ersten und zweiten Aufnahmeöffnung 119, 121 zuzulassen.

Insbesondere sind der erste und zweite Innenhülsenabschnitt 115, 117 ausgebildet, um eine Bewegung des jeweiligen ersten und zweiten Leitungsendes 101-1, 103-1 der jeweiligen ersten und zweiten Fluidleitung 101, 103 innerhalb der jeweiligen ersten und zweiten Aufnahmeöffnung 119, 121 entlang einer axialen Richtung 123 des Verbindungselements 105 zuzulassen, bzw. um ein Abwinkeln der ersten und zweiten Fluidleitung 101, 103 zuzulassen, bzw. um einen Achsversatz der ersten und zweiten Fluidleitung 101, 103 entlang einer radialen Richtung 125 des Verbindungselements 105 zuzulassen.

Dadurch kann ein wirksamer Toleranzausgleich durch die Fluidverbindungsanordnung 100 sichergestellt werden, welcher insbesondere beim Anordnen der Fluidverbindungsanordnung 100 in einer beengten Bauraumsituation von Vorteil ist.

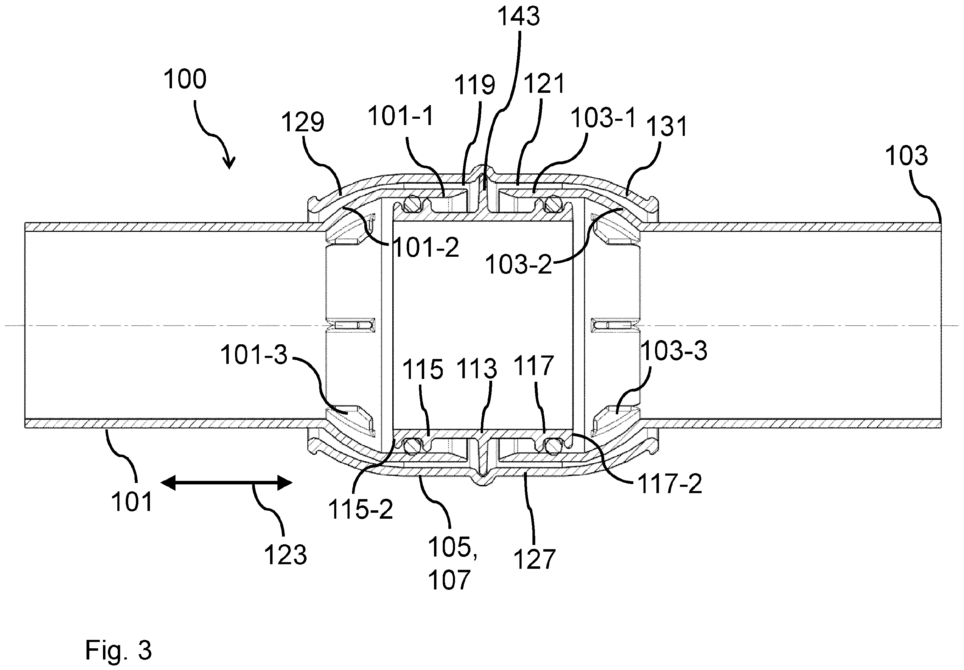

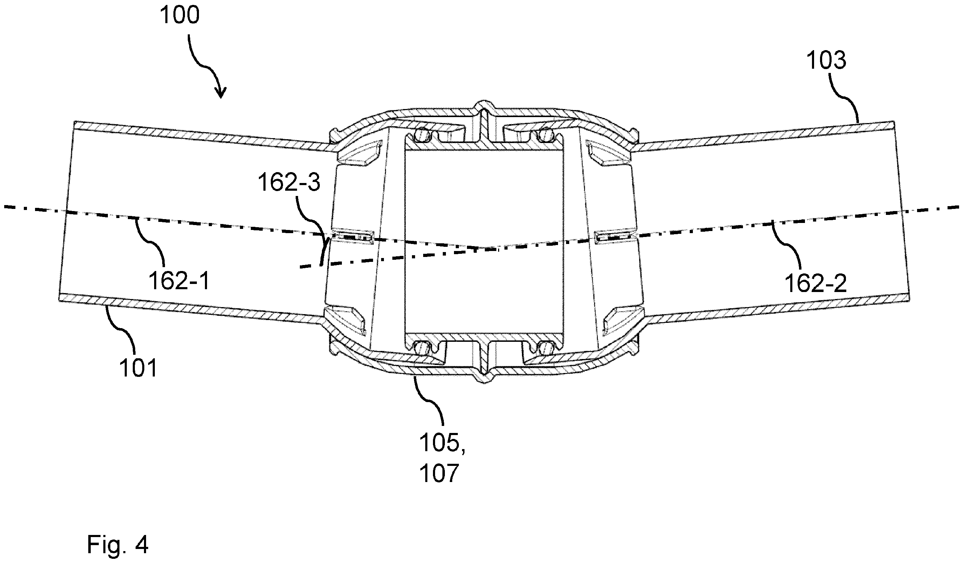

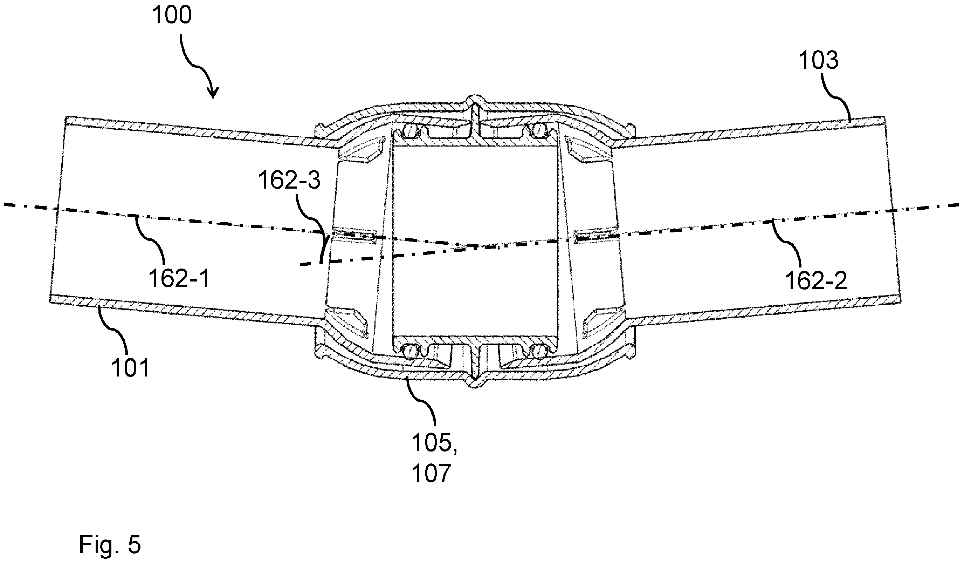

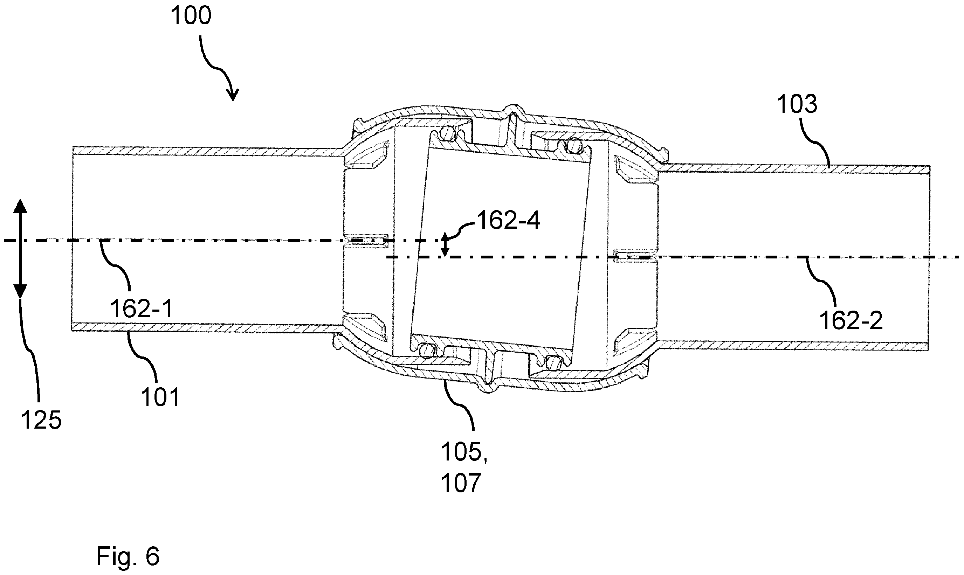

Die Fig. 1 zeigt eine entlang der axialen Richtung 123 gestreckte Fluidverbindungsanordnung 100. Für eine entsprechende entlang der axialen Richtung 123 des Verbindungselements 105 gestauchte Fluidverbindungsanordnung 100 wird auf die Fig. 3 verwiesen. Für eine entsprechende abgewinkelte erste und zweite Fluidleitung 101, 103 innerhalb der Fluidverbindungsanordnung 100 wird auf die Fig. 4 und Fig. 5 verwiesen. Für eine Fluidverbindungsanordnung 100, bei der die erste und zweite Fluidleitung 101, 103 einen Achsversatz aufweisen, wird auf die Fig. 6 verwiesen.

Die Außenhülse 107 weist einen Mittenabschnitt 127 auf, welcher zwischen der ersten und zweiten Öffnung 109, 111 angeordnet ist, wobei sich der Mittenabschnitt 127 insbesondere zumindest abschnittsweise parallel zum ersten und zweiten Innenhülsenabschnitt 115, 117 erstreckt, wobei die erste Aufnahmeöffnung 119 zwischen dem Mittenabschnitt 127 und dem ersten Innenhülsenabschnitt 115 angeordnet ist, und wobei die zweite Aufnahmeöffnung 121 zwischen dem Mittenabschnitt 127 und dem zweiten Innenhülsenabschnitt 117 angeordnet ist.

Hierbei verjüngt sich die Außenhülse 107 von dem Mittenabschnitt 127 aus in Richtung zu der ersten Öffnung 109, so dass ein erster verjüngter Abschnitt 129 der Außenhülse 107 an einem ersten gekrümmten Abschnitt 101-2 der ersten Fluidleitung 101 anliegt. Hierbei verjüngt sich die Außenhülse 107 von dem Mittenabschnitt 127 aus in Richtung zu der zweiten Öffnung 111, so dass ein zweiter verjüngter Abschnitt 131 der Außenhülse 107 an einem zweiten gekrümmten Abschnitt 103-2 der zweiten Fluidleitung 103 anliegt.

Alternativ zu dem jeweiligen gekrümmten Abschnitt 101-2, 103-2 der jeweiligen Fluidleitung 101, 103 kann auch ein in Fig. 1 nicht dargestellter winkliger Abschnitt jeweils an der jeweiligen Fluidleitung 101, 103 angeordnet sein, insbesondere mit zwei Knicken durch welche das jeweilige Leitungsende 101-1, 103-1 der jeweiligen Fluidleitung 101, 103 entlang der radialen Richtung 125 in Richtung des jeweiligen verjüngten Abschnitts 129, 131 der Außenhülse 107 versetzt wird, um einen Kontakt zu der Außenhülse 107 herzustellen.

Eine andere mögliche in Fig. 1 nicht dargestellte Alternative wäre, dass sich das jeweilige Leitungsende 101-1, 103-1 der jeweiligen Fluidleitung 101, 103 parallel zum Hauptabschnitt der Fluidleitung 101, 103, d.h. ohne radialen Versatz entlang der radialen Richtung 125, erstreckt, und dass in diesem Fall an dem jeweiligen Leitungsende 101-1, 103-1 der jeweiligen Fluidleitung 101, 103 eine Mehrzahl von Rippen, welche sich insbesondere entlang der axialen Richtung 123 erstrecken, angeordnet sind, um einen Kontakt zu der Außenhülse 107 herzustellen.

Durch den Kontakt zwischen dem jeweiligen verjüngten Abschnitt 129, 131 der Außenhülse 107 mit dem jeweiligen gekrümmten Abschnitt 101-2, 103-2 der ersten, bzw. zweiten Fluidleitung 101, 103 wird ein Herausziehen der jeweiligen Fluidleitung 101, 103 aus der jeweiligen Öffnung 109, 111 verhindert, und wird, wie in der Fig. 1 dargestellt, ein Endanschlag für die jeweilige Fluidleitung 101, 103 definiert, bis zu welchem die Fluidleitungen 101, 103 innerhalb des Verbindungselements 105 gestreckt werden können.

Somit erstreckt sich der erste verjüngte Abschnitt 129 von dem Mittenabschnitt 127 der Außenhülse 107 zu der ersten Öffnung 109. Somit erstreckt sich der zweite verjüngte Abschnitt 131 von dem Mittenabschnitt 127 der Außenhülse 107 zu der zweiten Öffnung 111.

Die Außenhülse 107 weist ferner einen ersten Öffnungsrand 133 auf, welcher die erste Öffnung 109 begrenzt, und die Außenhülse 107 weist ferner einen zweiten Öffnungsrand 135 auf, welcher die zweite Öffnung 111 begrenzt. Insbesondere ist ein Durchmesser 137 des ersten Öffnungsrands 133 und ist ein Durchmesser 139 des zweiten Öffnungsrands 135 geringer als ein Durchmesser 141 eines Mittenabschnitts 217 der Außenhülse 107.

Die innerhalb der Außenhülse 107 angeordnete Innenhülse 113 weist ferner ein Abstandselement 143 auf, welches an einer der Außenhülse 107 zugewandten Außenseite 113-1 der Innenhülse 113 angeordnet ist. Das Abstandselement 143 greift insbesondere in eine Vertiefung 145 der Außenhülse 107 ein, welche an der Innenhülse 113 zugewandten Innenseite 107-1 der Außenhülse 107 angeordnet ist, um eine Beabstandung zwischen der Innenhülse 113 und der Außenhülse 107 sicherzustellen und damit die erste und zweite Aufnahmeöffnung 119, 121 zu definieren.

Das Abstandselement 143 ist insbesondere zwischen dem ersten Innenhülsenabschnitt 115 und dem zweiten Innenhülsenabschnitt 117 angeordnet, insbesondere mittig an einem Innenhülsenmittenabschnitt 116 zwischen dem ersten und zweiten Innenhülsenabschnitt 115, 117.

Das Abstandselement 143 erstreckt sich insbesondere winklig, insbesondere rechtwinklig, zu der Außenhülse 107, sowie dem ersten und zweiten Innenhülsenabschnitt 115, 117.

Wie aus der Fig. 1 ferner hervorgeht, ist der erste Innenhülsenabschnitt 115, insbesondere ein der ersten Öffnung 109 zugewandter erster Endabschnitt 115-1 des ersten Innenhülsenabschnitts 115, von der ersten Öffnung 109 beabstandet und ist der zweite Innenhülsenabschnitt 117, insbesondere ein der zweiten Öffnung 111 zugewandter zweiter Endabschnitt 117-1 des zweiten Innenhülsenabschnitts 117, von der zweiten Öffnung 111 beabstandet.

An dem ersten Innenhülsenabschnitt 115, insbesondere an einem der ersten Öffnung 109 zugewandten ersten Endabschnitt 115-1 des ersten Innenhülsenabschnitt 115 ist eine erste Aufnahme 147 zum Aufnehmen eines ersten Dichtelements 149, insbesondere O-Ring, angeordnet. An dem zweiten Innenhülsenabschnitt 117, insbesondere an einem der zweiten Öffnung 111 zugewandten zweiten Endabschnitt 117-1 des zweiten Innenhülsenabschnitts 117, ist eine zweite Aufnahme 151 zum Aufnehmen eines zweiten Dichtelements 153, insbesondere O-Ring, angeordnet.

Die erste und/oder zweite Aufnahme 147, 151 kann jeweils durch zumindest eine den ersten und/oder zweiten Endabschnitt 115-1, 117-1 zumindest abschnittsweise umlaufende Rippe begrenzt sein oder als eine Nut geformt sein.

An dem der ersten Öffnung 109 zugewandten ersten Endabschnitt 115-1 des ersten Innenhülsenabschnitts 115 ist ein erster Anschlag 115-2 geformt, welcher ausgebildet ist, um an einem ersten Gegenanschlag 101-3 der ersten Fluidleitung 101 anzuliegen und ein Einführen des ersten Leitungsendes 101-1 der ersten Fluidleitung 101 in die erste Aufnahmeöffnung 119 zu begrenzen.

An dem der zweiten Öffnung 111 zugewandten zweiten Endabschnitt 117-1 des zweiten Innenhülsenabschnitts 117 ist ein zweiter Anschlag 117-2 geformt, welcher ausgebildet ist, um an einem zweiten Gegenanschlag 103-3 der zweiten Fluidleitung 103 anzuliegen und ein Einführen des zweiten Leitungsendes 103-1 der zweiten Fluidleitung 103 in die zweite Aufnahmeöffnung 121 zu begrenzen.

Auch wenn dies in der Fig. 1 nicht gezeigt ist, können das erste und zweite Leitungsende 103-1, 103-2 der ersten und zweiten Fluidleitung 101, 103 optional miteinander verbunden sein, insbesondere durch eine kraftschlüssige oder formschlüssige Verbindung, insbesondere Verrastung, oder durch eine stoffschlüssige Verbindung, insbesondere Verschweißung. Insbesondere kann ferner zwischen dem ersten und zweiten Leitungsende 103-1, 103-2 optional eine in Fig. 1 nicht gezeigte Leitungsdichtung angeordnet sein, um eine fluiddichte Verbindung zwischen dem ersten und zweiten Leitungsende 103-1, 103-2 sicherzustellen.

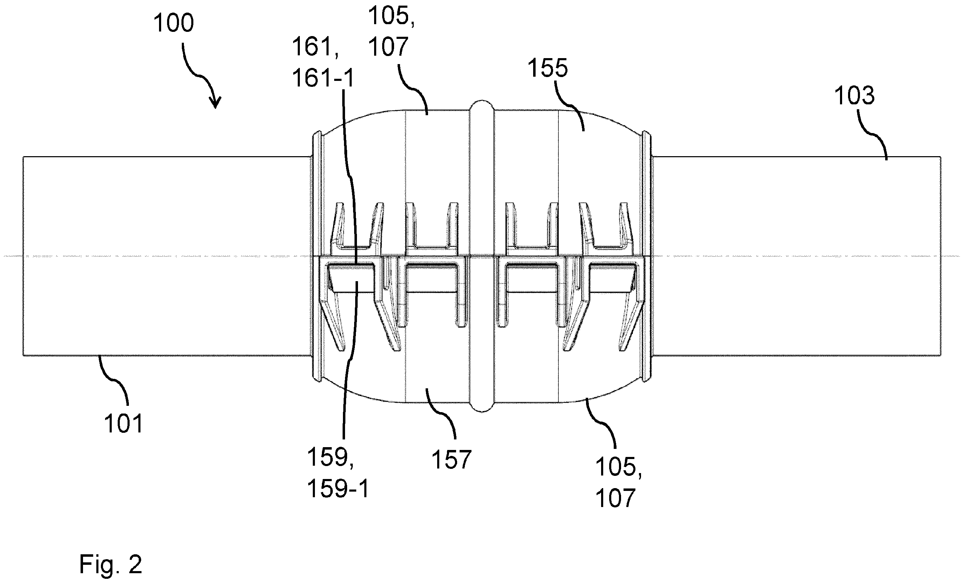

Fig. 2 zeigt eine weitere perspektivische Ansicht der in Fig. 1 dargestellten Fluidverbindungsanordnung. In der Fig. 2 ist eine Außenansicht der in Fig. 1 dargestellten Fluidverbindungsanordnung 100 dargestellt. In der Fig. 2 ist lediglich die erste Fluidleitung 101, die zweite Fluidleitung 103 und die Außenhülse 107 des Verbindungselements 105 dargestellt. Für die weiteren Details der Fluidverbindungsanordnung 100 wird auf die Ausführungen zur Fig. 1 verwiesen.

Wie aus der Fig. 2 zu entnehmen ist, ist die Außenhülse 107 mehrteilig ausgebildet. Die Außenhülse 107 umfasst insbesondere eine erste Außenhülsenhälfte 155 und eine zweite Außenhülsenhälfte 157, wobei die erste und zweite Außenhülsenhälfte 155, 157 insbesondere durch eine Rastverbindung, miteinander verbunden sind, um die Außenhülse 107 zu formen.

Die Teilung der Außenhülse 107 in die erste und zweite Außenhülsenhälfte 155, 157 erfolgt mittig entlang der Längsachse der Fluidverbindungsanordnung 100.

Die in Fig. 2 dargestellte Rastverbindung umfasst zumindest einen, insbesondere vier Rasthaken 159 der ersten, bzw. zweiten Außenhülsenhälfte 155, 157, welche jeweils in eine Einführöffnung 161 der zweiten, bzw. ersten Außenhülsenhälfte 157, 155 eingreifen, um die erste und zweite Außenhülsenhälften 155, 157 rastend miteinander zu verbinden.

Hierbei weisen die Rasthaken 159 insbesondere jeweils einen Rastvorsprung 159-1 auf, welcher einen die jeweilige Einführöffnung 161 begrenzenden Einführöffnungsrand 161-1 hintergreift, um eine wirksame Verrastung sicherzustellen.

Durch das entsprechende Verrasten der beiden Außenhülsenhälfte 155, 157 kann eine stabile Befestigung des Verbindungselements 105 mit der ersten und zweiten Fluidleitung 101, 103 erreicht werden.

Fig. 3 zeigt eine weitere perspektivische Ansicht der in Fig. 1 dargestellten Fluidverbindungsanordnung in einem gestauchten Zustand.

Für weitere Details hierzu wird auf die Ausführungen zur Fig. 1 verwiesen. Im Gegensatz zu dem in Fig. 1 gezeigten gestreckten Zustand der Fluidverbindungsanordnung 100 kann aus dem in Fig. 3 gezeigten gestauchten Zustand, insbesondere ein um 10 mm gestauchter Zustand, der Fluidverbindungsanordnung 100 entnommen werden, dass ein wirksamer Toleranzausgleich möglich ist. Die in der Fig. 3 dargestellte Stauchung erfolgt entlang der axialen Richtung 123 des Verbindungselements 105.

In dem in Fig. 3 dargestellten gestauchten Zustand besteht kein Kontakt mehr zwischen den jeweiligen verjüngten Abschnitten 129, 131 der Außenhülse 107 und den jeweiligen gekrümmten Abschnitten 101-2, 103-2 der jeweiligen Fluidleitung 101, 103, da die jeweiligen Leitungsenden 101-1, 103-1 der jeweiligen Fluidleitung 101, 103 tiefer in die jeweilige Aufnahmeöffnung 119, 121 hineingeschoben wurden.

Auch wenn dies in Fig. 3 nicht dargestellt ist, können die jeweiligen Leitungsenden 101-1, 103-1 der jeweiligen Fluidleitung 101, 103 so weit in die jeweilige Aufnahmeöffnung 119, 121 hineingeschoben werden, bis die jeweiligen Leitungsenden 101-1, 103-1 der jeweiligen Fluidleitung 101, 103 an dem Abstandselement 143 anliegen, wobei hierbei auch die jeweiligen Gegenabschnitte 101-3, 103-3 der jeweiligen Fluidleitung 101, 103 an dem entsprechenden Anschlag 115-2, 117-2 des jeweiligen Innenhülsenabschnitts 115, 117 anliegen.

Fig. 4 zeigt eine weitere perspektivische Ansicht der in Fig. 1 dargestellten Fluidverbindungsanordnung in einem gestreckten und abgewinkelten Zustand.

Wie aus der Fig. 4 hervorgeht, können die Fluidleitungen 101, 103 in einem gestreckten Zustand innerhalb des Verbindungselements 105 abgewinkelt werden, insbesondere bis zu einem Winkel von ca. 10°, so dass hierbei ein besonders wirksamer Toleranzausgleich sichergestellt werden kann.

Durch die abgewinkelte Anordnung der ersten und zweiten Fluidleitung 101, 103 zueinander schließt eine erste Mittelachse 162-1 der ersten Fluidleitung 101 mit einer zweiten Mittelachse 162-2 der zweiten Fluidleitung 103 einen Winkel 162-3 ein, welcher in dem vorliegenden Ausführungsbeispiel insbesondere ca. 10° beträgt.

Fig. 5 zeigt eine weitere perspektivische Ansicht der in Fig. 1 dargestellten Fluidverbindungsanordnung in einem gestauchten und abgewinkelten Zustand.

Wie aus der Fig. 5 hervorgeht, können die Fluidleitungen 101, 103 in einem gestauchten Zustand innerhalb des Verbindungselements 105 abgewinkelt werden, insbesondere bis zu einem Winkel von ca. 10°, so dass hierbei ein besonders wirksamer Toleranzausgleich sichergestellt werden kann.

Fig. 6 zeigt eine weitere perspektivische Ansicht der in Fig. 1 dargestellten Fluidverbindungsanordnung mit einem Achsversatz der Fluidleitungen.

Wie aus der Fig. 5 hervorgeht, können die Fluidleitungen 101, 103 bis zu einem gewissen Grad entlang einer radialen Richtung 125 des Verbindungselements 105 zueinander achsversetzt werden, so dass hierbei ein besonders wirksamer Toleranzausgleich sichergestellt werden kann.

Der Achsversatz 162-4 definiert hierbei einen radialen Abstand zwischen der ersten Mittelachse 162-1 der ersten Fluidleitung 101 und der zweiten Mittelachse 162-2 der zweiten Fluidleitung 103.

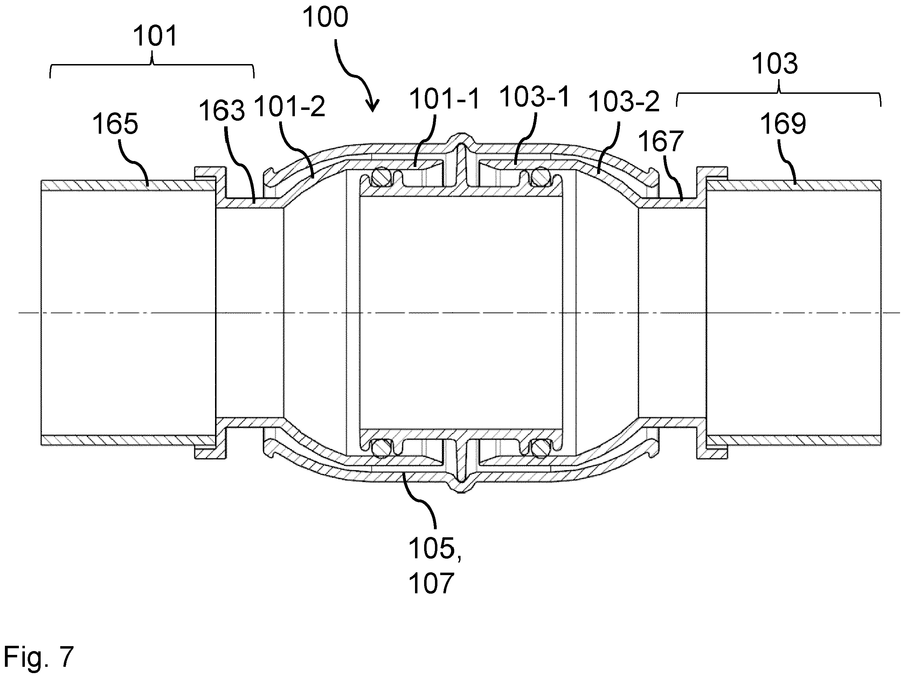

Fig. 7 zeigt eine perspektivische Ansicht einer Fluidverbindungsanordnung gemäß einer weiteren Ausführungsform. Die in Fig. 7 gezeigte weitere Ausführungsform entspricht im Wesentlichen der in Fig. 1 gezeigten ersten Ausführungsform, bis darauf, dass die Fluidleitungen 101, 103 jeweils mehrstückig aufgebaut sind.

Die erste Fluidleitung 101 umfasst einen ersten Fluidadapter 163 und einen mit dem ersten Fluidadapter 163 verbundenen ersten Leitungsabschnitt 165. Hierbei ist der erste Fluidadapter 163 in die erste Öffnung 109 eingeführt, und umfasst der erste Fluidadapter 163 das erste Leitungsende 101-1 und den ersten gekrümmten Abschnitt 101-2.

Die zweite Fluidleitung 103 umfasst einen zweiten Fluidadapter 167 und einen mit dem zweiten Fluidadapter 167 verbundenen zweiten Leitungsabschnitt 169. Hierbei ist der zweite Fluidadapter 167 in die zweite Öffnung 111 eingeführt, und umfasst der zweite Fluidadapter 167 das zweite Leitungsende 103-1 und den zweiten gekrümmten Abschnitt 103-2.

Die fluidtechnische Verbindung zwischen dem jeweiligen Fluidadapter 163, 167 und dem jeweiligen Leitungsabschnitt 165, 169 umfasst insbesondere eine lösbare Steckverbindung oder eine nicht-lösbare Schweiß- oder Klebeverbindung.

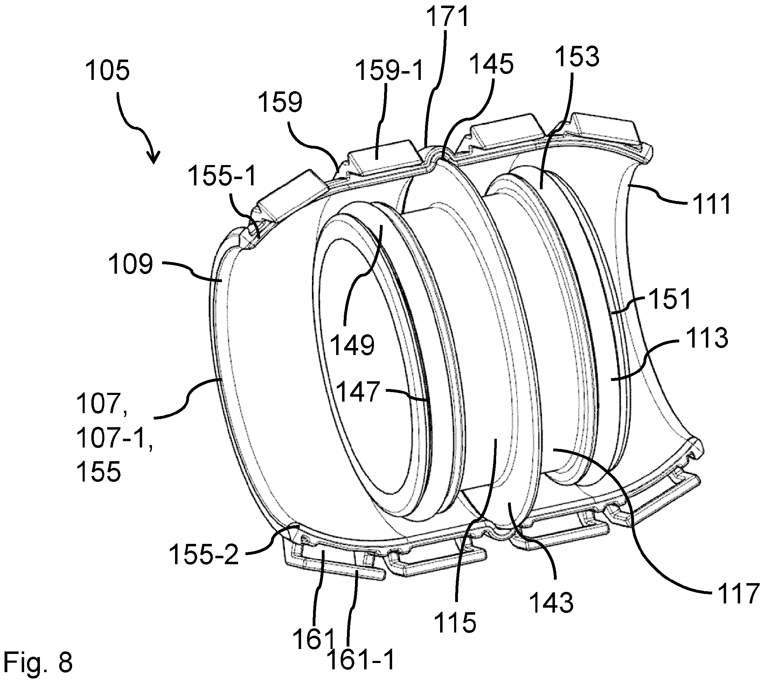

Fig. 8 zeigt eine perspektivische Ansicht eines Verbindungselements der in Fig. 1 dargestellten Fluidverbindungsanordnung.

In der Fig. 8 ist nur eine erste Außenhülsenhälfte 155 der Außenhülse 105 dargestellt, wobei die erste Außenhülsenhälfte 155 insbesondere an einem ersten Außenhülsenrand 155-1 insbesondere vier Rasthaken 159 umfasst, welche jeweils in eine Einführöffnung 161 der in Fig. 8 nicht dargestellten zweiten Außenhülsenhälfte 157 eingreifen. Insbesondere an einem ersten Außenhülsenrand 155-1 abgewandten zweiten Außenhülsenrand 155-2 der ersten Außenhülsenhälfte 155 sind insbesondere vier Einführöffnungen 161 angeordnet, wobei jeweils ein Rasthaken 159 der in Fig. 8 nicht dargestellten zweiten Außenhülsenhälfte 157 in jeweils eine der vier Einführöffnungen 161 der ersten Außenhülsenhälfte 155 eingreift, um die erste und zweite Außenhülsenhälften 155, 157 rastend miteinander zu verbinden.

In der Fig. 8 ist ferner die Innenhülse 113 mit dem ersten Innenhülsenabschnitt 115 und dem ersten Dichtelement 149, sowie dem zweiten Innenhülsenabschnitt 117 und dem zweiten Dichtelement 153, sowie dem dazwischen angeordneten Abstandselement 143 dargestellt.

Das Abstandselement 143 ist hierbei in einer Vertiefung 145 der Außenhülse 107 aufgenommen, wobei entsprechend an einer der Innenhülse 113 abgewandten Außenseite der Außenhülse 107 ein komplementär zu der Vertiefung 145 erstreckender Außenwulst 171 geformt ist.

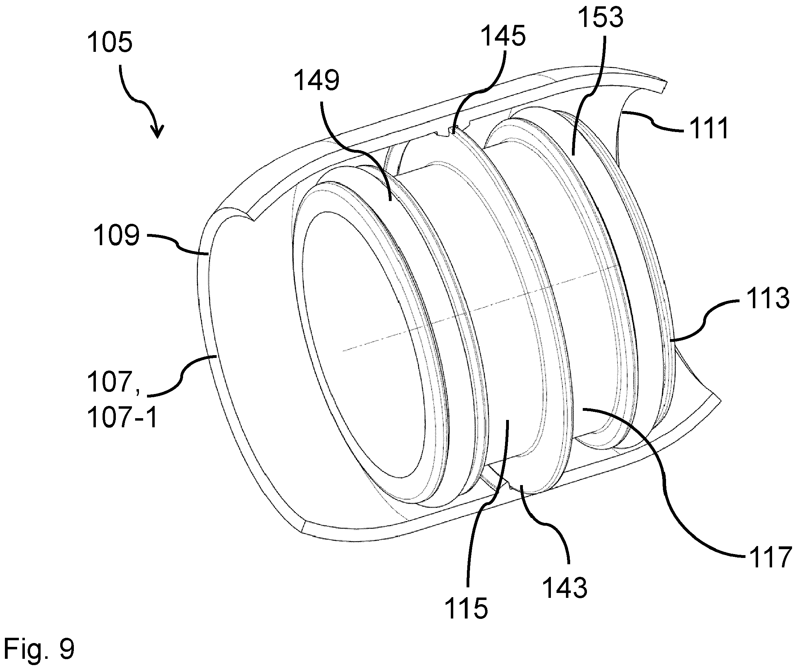

Fig. 9 zeigt eine perspektivische Ansicht eines Verbindungselements gemäß einer weiteren Ausführungsform. Das in Fig. 9 dargestellte Verbindungselement 105 ist im Gegensatz zu dem in Fig. 7 dargestellten Verbindungselement 105 nicht mehrstückig, sondern einstückig aufgebaut. In der Fig. 9 ist ein Schnitt durch die Außenhülse 107 des Verbindungselements 105 dargestellt, so dass die innerhalb der Außenhülse 107 angeordnete Innenhülse 113 sichtbar ist.

Im Gegensatz zu dem in Fig. 7 dargestellten Verbindungselement 105, ist die in der Fig. 9 dargestellte Vertiefung 145 der Außenhülse 107, welche zur Aufnahme des Abstandselements 143 ausgebildet ist, ausschließlich an der Innenseite 107-1 der Außenhülse 107 angeordnet, und ist an der Außenseite der Außenhülse 107 kein Außenwulst 171 geformt.

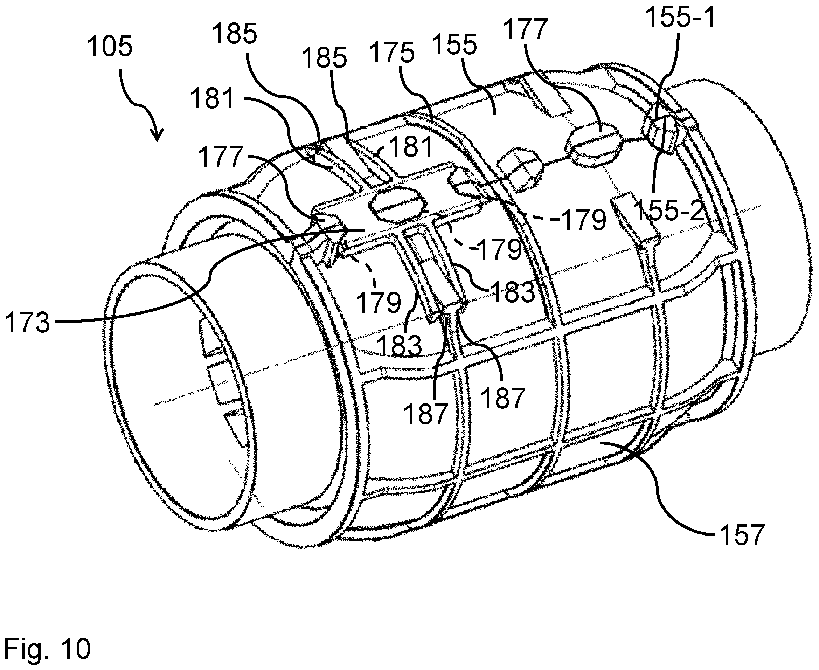

Fig. 10 zeigt eine perspektivische Ansicht eines Verbindungselements gemäß einer weiteren Ausführungsform.

Das in Fig. 10 dargestellte Verbindungselement 105 gemäß der weiteren Ausführungsform entspricht dem in Fig. 1, bzw. Fig. 2 dargestellten Verbindungselement 105, bis darauf, dass das in Fig. 10 dargestellte Verbindungselement 105 anstatt der Rasthaken 159 ein Halteelement 173 aufweist, welches mit dem Verbindungselement 105 verrastet ist, um die Rastverbindung zwischen den beiden Außenhülsenhälften 155, 157 des Verbindungselements 105 bereitzustellen.

Zudem weist das in Fig. 10 dargestellte Verbindungselement 105 gemäß der weiteren Ausführungsform eine im Vergleich zu dem in Fig. 1, bzw. Fig. 2 dargestellten Verbindungselement 105 eine unterschiedliche Außenkontur 175 auf.

Wie aus der Fig. 10 hervorgeht, umfasst die Außenkontur 175 des Verbindungselements 105 eine Vielzahl von Positionierungsvorsprüngen 177, welche in dem Kontaktbereich zwischen dem ersten Außenhülsenrand 155-1 der ersten Außenhülsenhälfte 155 und dem zweiten Außenhülsenrand 155-2 der zweiten Außenhülsenhälfte 155 angeordnet sind.

Die Positionierungsvorsprünge 177 der Außenkontur 175 des Verbindungselements 105 sind in entsprechende Positionierungsöffnungen 179 des Halteelements 173 eingeführt, um das Halteelement 173 im Bereich der beiden Außenhülsenränder 155-1, 155-2 an dem Verbindungselement 105 zu positionieren.

Um eine wirksame Verrastung des Halteelements 173 an den beiden Außenhülsenhälften 155, 157 sicherzustellen, weist das Halteelement 173 erste Rastarme 181, insbesondere ein Paar von gegenüberliegenden ersten Rastarmen 181, und zweite Rastarme 183, insbesondere ein Paar von gegenüberliegenden zweiten Rastarmen 183, auf.

Die Außenkontur 175 des Verbindungselements 105 umfasst hierbei Stege, welche insbesondere die beiden Außenhülsenhälften 155, 157 umlaufen. Hierbei weisen die Stege der Außenkontur an einander gegenüberliegenden Seiten des Halteelements 173 erste Hinterschneidungen 185 und zweite Hinterschneidungen 187 auf.

Die ersten Rastarme 181, insbesondere das Paar von gegenüberliegenden ersten Rastarmen 181, greifen in die ersten Hinterschneidungen 185 ein, und die zweiten Rastarme 183, insbesondere das Paar von gegenüberliegenden zweiten Rastarmen 183 greifen in die zweiten Hinterschneidungen 187 ein, um das Halteelement 173 an dem Verbindungselement 105 verliersicher zu verrasten.

Somit wird durch die entsprechende Verrastung ein Abfallen des Halteelements 173 von dem Verbindungselement 105 verhindert. Das gegebenenfalls auftretende Auseinandertreiben der beiden Außenhülsenhälften 155, 157, welches durch das Halteelement 173 verhindert wird, hat keinen mechanischen Einfluss auf die Verrastung des Halteelements 173.

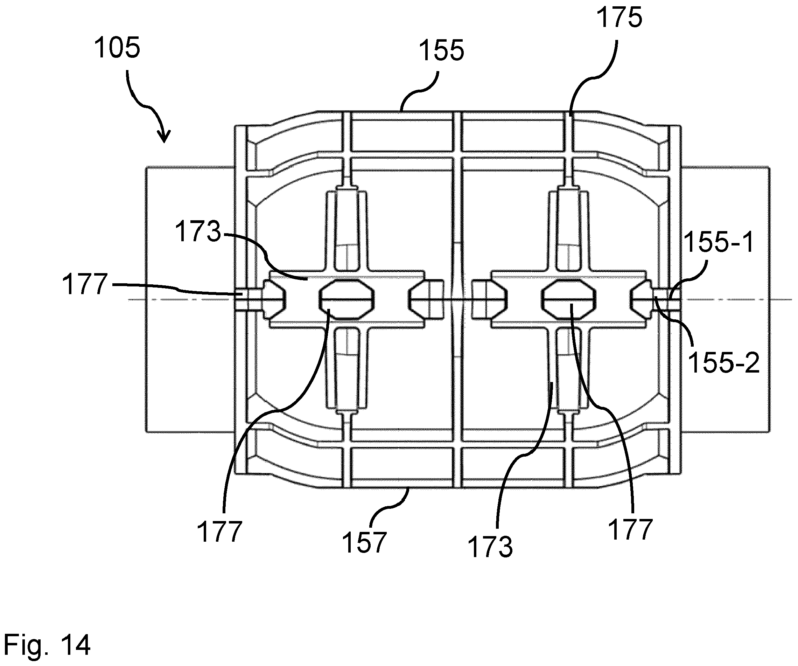

Auch wenn das in der Fig. 10 nicht dargestellt ist, kann an dem Verbindungselement 105 eine Mehrzahl von Halteelementen 173 angeordnet sein, um eine wirksame Fixierung der beiden Außenhülsenhälften 155, 157 des Verbindungselements 105 sicherzustellen. Hierzu wird auf die Fig. 14 verwiesen.

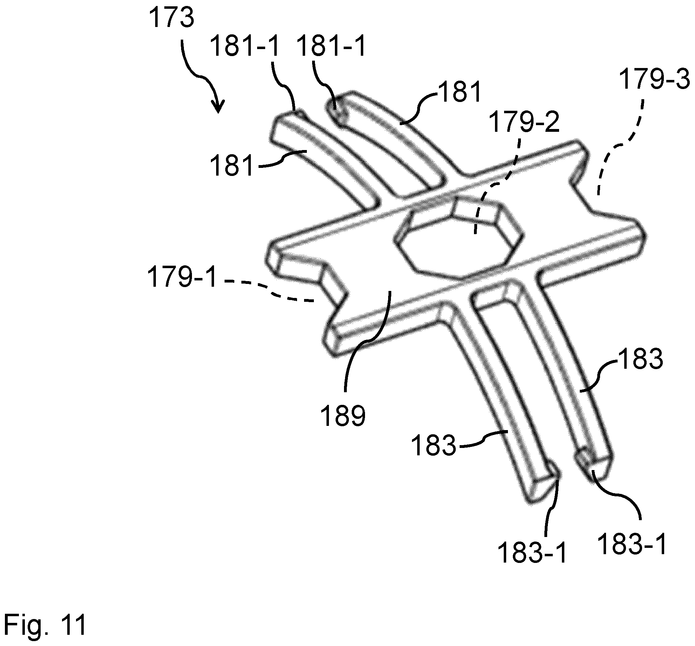

Fig. 11 zeigte eine perspektivische Ansicht eines Halteelements des in Fig. 10 dargestellten Verbindungselements.

Wie schon in Bezug auf die Fig. 10 ausgeführt wurde, weist das Halteelement 173 eine Mehrzahl von Positionierungsöffnungen 179 auf, in welche entsprechende in Fig. 10 dargestellte Positionierungsvorsprünge 177 der beiden Außenhülsenhälften 155, 157 des Verbindungselements 105 eingreifen, um eine vorteilhafte Positionierung des Halteelements 173 an dem Verbindungselement 105 zu ermöglichen.

Wie in der Fig. 11 im Detail dargestellt ist, sind hier in einem Stegelement 189 des Halteelements 173 drei Positionierungsöffnungen 179-1, 179-2, 179-3 angeordnet, in welche unterschiedliche Positionierungsvorsprünge 177 der beiden Außenhülsenhälften 155, 157 des Verbindungselements 105 eingeführt werden können.

Die erste Positionierungsöffnung 179-1 und die dritte Positionierungsöffnung 179-3 sind einander gegenüberliegend endseitig an dem Stegelement 189 angeordnet und halbseitig geschlossen, wohingegen die zweite Positionierungsöffnung 179-2 mittig und vollumfänglich geschlossen in dem Stegelement 189 angeordnet ist, so dass eine wirksame Positionierung des Halteelements 173 durch die Positionierungsvorsprünge 177 der beiden Außenhülsenhälften 155, 157 des Verbindungselements 105 sichergestellt wird.

Das Halteelement 173 weist ferner erste Rastarme 181, insbesondere ein Paar von gegenüberliegenden ersten Rastarmen 181, und zweite Rastarme 183, insbesondere ein Paar von gegenüberliegenden zweiten Rastarmen 183, auf, welche jeweils an einander gegenüberliegenden Seiten des Stegelements 187 des Halteelements 173 angeordnet sind.

Jeder der Rastarme 181, 183 weist entsprechende jeweilige Rastvorsprünge 181-1, 183-1 auf, welche in die in Fig. 10 dargestellten entsprechenden ersten, bzw. zweiten Hinterschneidungen 185, 187 eingreifen, um eine wirksame Befestigung des Halteelements 173 an dem Verbindungselement 105 sicherzustellen.

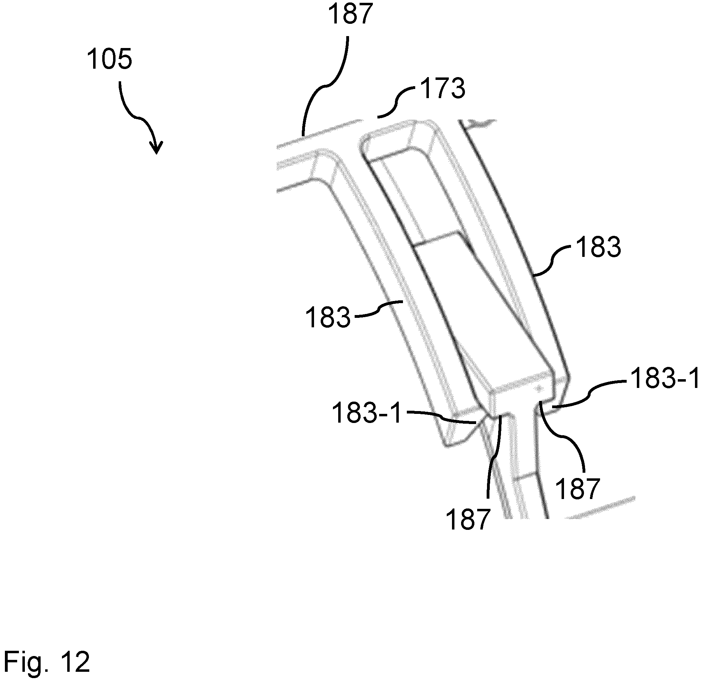

Fig. 12 zeigt eine perspektivische Ansicht einer Rastverbindung des in Fig. 10 dargestellten Verbindungselements.

In der Fig. 12 ist eine vergrößerte Ansicht der Rastverbindung zwischen den zweiten Rastarme 183, insbesondere dem Paar von gegenüberliegenden zweiten Rastarmen 183, gezeigt, welche in die entsprechenden zweiten Hinterschneidungen 187 an den Stegen der Außenkontur 175 des Verbindungselements 105 eingreifen.

Für weitere Details wird auf die vorangegangenen Ausführungen verwiesen.

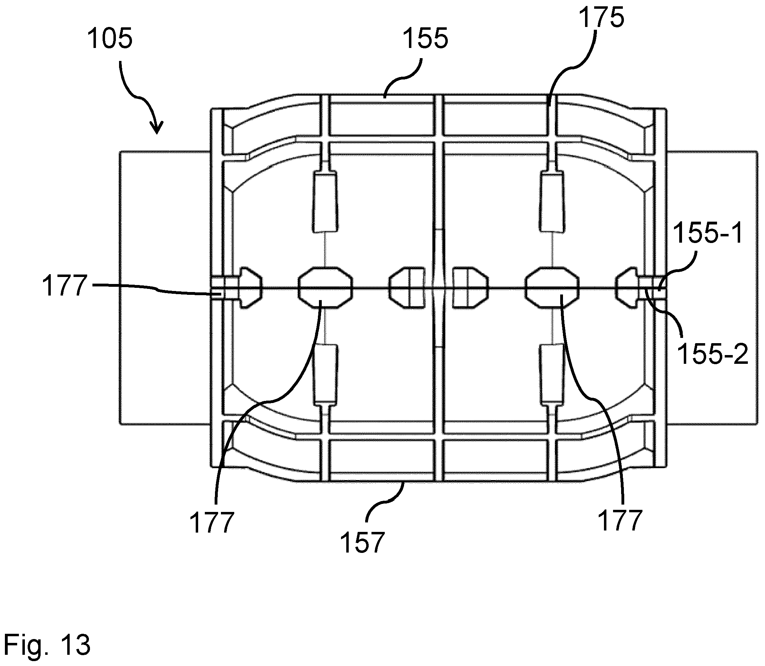

Fig. 13 zeigt eine weitere perspektivische Ansicht des in Fig. 10 dargestellten Verbindungselements ohne Halteelement.

Wie aus der Fig. 13 zu entnehmen ist, weist das Verbindungselement 105 zwei Außenhülsenhälften 155, 157 auf, welche sich an dem entsprechenden ersten und zweiten Außenhülsenrand 155-1, 155-2 berühren, wobei die entsprechenden Positionierungsvorsprünge 177 an dem Kontaktbereich zwischen den beiden Außenhülsenhälften 155, 175 angeordnet sind, und eine wirksame Befestigung eines in Fig. 13 nicht dargestellten Halteelements 173 an dem Verbindungselement 105 sicherzustellen.

Wie aus der Fig. 13 hervorgeht, werden die jeweiligen Positionierungsvorsprünge 177 jeweils durch eine erste Hälfte eines an der ersten Außenhülsenhälfte 155 angeordneten Positionierungsvorsprungs 177 und durch eine zu der ersten Hälfte komplementären zweiten Hälfte eines an der zweiten Außenhülsenhälfte 157 angeordneten Positionierungsvorsprungs 177 geformt.

Die Positionierungsvorsprünge 177 ermöglichen das Anbringen von jeweils zwei Halteelementen 173 an jeder Seite des Verbindungselements 105, wobei hierbei auf die Darstellung gemäß der Fig. 14 verwiesen wird.

Fig. 14zeigt eine weitere perspektivische Ansicht des in Fig. 13 dargestellten Verbindungselements mit zwei Halteelementen.

Die Fig. 14 zeigt das in Fig. 13 dargestellte Verbindungselement 105 mit zwei nebeneinander angeordneten Halteelementen 173 auf der dargestellten Seite. Auf der in Fig. 14 nicht dargestellten gegenüberliegenden Seite des Verbindungselements 105 sind zwei weitere Halteelemente 173 angeordnet, um eine wirksame beidseitige Fixierung des Verbindungselements 105 durch die Halteelement 173 zu ermöglichen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidverbindungsanordnung
- 101: Erste Fluidleitung
- 101-1: Erste Leitungsende
- 101-2: Erster gekrümmter Abschnitt
- 101-3: Erster Gegenanschlag
- 103: Zweite Fluidleitung
- 103-1: Zweites Leitungsende
- 103-2: Zweiter gekrümmte Abschnitt
- 103-3: Zweiter Gegenanschlag
- 105: Verbindungselement
- 107: Außenhülse
- 107-1: Innenseite der Außenhülse
- 109: Erste Öffnung
- 111: Zweite Öffnung
- 113: Innenhülse
- 113-1: Außenseite der Innenhülse
- 115: Erster Innenhülsenabschnitt
- 115-1: Erster Endabschnitt
- 115-2: Erster Anschlag
- 116: Innenhülsenmittenabschnitt
- 117: Zweiter Innenhülsenabschnitt
- 117-1: Zweiter Endabschnitt
- 117-2: Zweiter Anschlag
- 119: Erste Aufnahmeöffnung
- 121: Zweite Aufnahmeöffnung
- 123: Axiale Richtung
- 125: Radiale Richtung
- 127: Mittenabschnitt
- 129: Erster verjüngter Abschnitt
- 131: Zweiter verjüngter Abschnitt
- 133: Erster Öffnungsrand
- 135: Zweiter Öffnungsrand
- 137: Durchmesser des ersten Öffnungsrands
- 139: Durchmesser des zweiten Öffnungsrands
- 141: Durchmesser des Mittenabschnitts
- 143: Abstandselement
- 145: Vertiefung der Außenhülse
- 147: Erste Aufnahme
- 149: Erstes Dichtelement
- 151: Zweite Aufnahme
- 153: Zweites Dichtelement
- 155: Erste Außenhülsenhälfte
- 155-1: Erster Außenhülsenrand
- 155-2: Zweiter Außenhülsenrand
- 157: Zweite Außenhülsenhälfte
- 159: Rasthaken
- 159-1: Rastvorsprung
- 161: Einführöffnung
- 161-1: Einführöffnungsrand
- 162-1: Erste Mittelachse der ersten Fluidleitung
- 162-2: Zweite Mittelachse zweiten Fluidleitung
- 162-3: Winkel zwischen der ersten und zweiten Erstreckungsachse
- 162-4: Achsversatz
- 163: Erster Fluidadapter
- 165: Erster Leitungsabschnitt
- 167: Zweiter Fluidadapter
- 169: Zweiter Leitungsabschnitt
- 171: Außenwulst
- 173: Halteelement
- 175: Außenkontur
- 177: Positionierungsvorsprünge
- 179: Positionierungsöffnungen
- 179-1: Erste Positionierungsöffnung
- 179-2: Zweite Positionierungsöffnung
- 179-3: Dritte Positionierungsöffnung
- 181: Erste Rastarme
- 183: Zweite Rastarme
- 185: Erste Hinterschneidungen
- 187: Zweite Hinterschneidungen
- 189: Stegelement

## Patentansprüche

1. Verbindungselement (105) zum Herstellen einer Fluidverbindung mit zwei Fluidleitungen (101, 103), mit:
einer Außenhülse (107), welche eine erste Öffnung (109) zum Einführen einer ersten Fluidleitung (101) begrenzt, und welche eine der ersten Öffnung (109) abgewandte zweite Öffnung (111) zum Einführen einer zweiten Fluidleitung (103) begrenzt, und
einer Innenhülse (113), welche innerhalb der Außenhülse (107) angeordnet ist, wobei die Innenhülse (113) einen sich in Richtung der ersten Öffnung (109) erstreckenden ersten Innenhülsenabschnitt (115) und einen sich in Richtung der zweiten Öffnung (111) erstreckenden zweiten Innenhülsenabschnitt (117) aufweist,
wobei zwischen dem ersten Innenhülsenabschnitt (115) und der Außenhülse (107) eine erste Aufnahmeöffnung (119) zum Aufnehmen eines ersten Leitungsendes (101-1) der ersten Fluidleitung (101) geformt ist, und wobei zwischen dem zweiten Innenhülsenabschnitt (117) und der Außenhülse (107) eine zweite Aufnahmeöffnung (121) zum Aufnehmen eines zweiten Leitungsendes (103-1) der zweiten Fluidleitung (103) geformt ist, und
wobei der erste und zweite Innenhülsenabschnitt (115, 117) ausgebildet sind, um eine Bewegung des jeweiligen ersten und zweiten Leitungsendes (101-1, 103-1) der jeweiligen ersten und zweiten Fluidleitung (101, 103) innerhalb der jeweiligen ersten und zweiten Aufnahmeöffnung (119, 121) zuzulassen.

2. Verbindungselement (105) nach Anspruch 1, wobei die Außenhülse (107) einen Mittenabschnitt (127) aufweist, welcher zwischen der ersten und zweiten Öffnung (109, 111) angeordnet ist, wobei sich der Mittenabschnitt (127) insbesondere zumindest abschnittsweise parallel zum ersten und zweiten Innenhülsenabschnitt (117) erstreckt, wobei die erste Aufnahmeöffnung (119) zwischen dem Mittenabschnitt (127) und dem ersten Innenhülsenabschnitt (115) angeordnet ist, und wobei die zweite Aufnahmeöffnung (121) zwischen dem Mittenabschnitt (127) und dem zweiten Innenhülsenabschnitt (117) angeordnet ist.

3. Verbindungselement (105) nach Anspruch 1 oder 2, wobei die Außenhülse (107) einen Mittenabschnitt (127) aufweist, welcher zwischen der ersten und zweiten Öffnung (109, 111) angeordnet ist, wobei sich die Außenhülse (107) von dem Mittenabschnitt (127) aus in Richtung zu der ersten Öffnung (109) verjüngt, so dass ein erster verjüngter Abschnitt (129) der Außenhülse (107) ausgebildet ist, an einem ersten gekrümmten Abschnitt (101-2) der ersten Fluidleitung (101) anzuliegen, und wobei sich die Außenhülse (107) von dem Mittenabschnitt (127) aus in Richtung zu der zweiten Öffnung (111) verjüngt, so dass ein zweiter verjüngter Abschnitt (131) der Außenhülse (107) ausgebildet ist, an einem zweiten gekrümmten Abschnitt (103-2) der zweiten Fluidleitung (103) anzuliegen.

4. Verbindungselement (105) nach einem der vorangehenden Ansprüche, wobei die Außenhülse (107) einen ersten Öffnungsrand (133) aufweist, welcher die erste Öffnung (109) begrenzt, wobei die Außenhülse (107) einen zweiten Öffnungsrand (135) aufweist, welcher die zweite Öffnung (111) begrenzt, und wobei insbesondere ein Durchmesser (137, 139) des ersten und zweiten Öffnungsrands (133, 135) geringer als ein Durchmesser (141) eines Mittenabschnitts (127) der Außenhülse (107) ist.

5. Verbindungselement (105) nach einem der vorangehenden Ansprüche, wobei die Innenhülse (113) ein Abstandselement (143) aufweist, welches an einer der Außenhülse (107) zugewandten Außenseite (113-1) der Innenhülse (113) angeordnet ist, wobei das Abstandselement (143) in eine Vertiefung (145) der Außenhülse (107) eingreift, welche an einer der Innenhülse (113) zugewandten Innenseite (107-1) der Außenhülse (107) angeordnet ist, um eine Beabstandung zwischen der Innenhülse (113) und der Außenhülse (107) sicherzustellen, wobei sich das Abstandselement (143) insbesondere winklig, insbesondere rechtwinklig, zu der Außenhülse (107), dem ersten und zweiten Innenhülsenabschnitt (115, 117) erstreckt.

6. Verbindungselement (105) nach einem der vorangehenden Ansprüche, wobei der erste Innenhülsenabschnitt (115), insbesondere ein der ersten Öffnung (109) zugewandter erster Endabschnitt (115-1) des ersten Innenhülsenabschnitts (115), von der ersten Öffnung (109) beabstandet ist, und/oder wobei der zweite Innenhülsenabschnitt (117), insbesondere ein der zweiten Öffnung (111) zugewandter zweiter Endabschnitt (117-1) des zweiten Innenhülsenabschnitts (117), von der zweiten Öffnung (111) beabstandet ist.

7. Verbindungselement (105) nach einem der vorangehenden Ansprüche, wobei an dem ersten Innenhülsenabschnitt (115), insbesondere an einem der ersten Öffnung (109) zugewandten ersten Endabschnitt (115-1) des ersten Innenhülsenabschnitts (115) eine erste Aufnahme (147) zum Aufnehmen eines ersten Dichtelements (149), insbesondere O-Ring, angeordnet ist, und/oder wobei an dem zweiten Innenhülsenabschnitt (117), insbesondere an einem der zweiten Öffnung (111) zugewandten zweiten Endabschnitt (117-1) des zweiten Innenhülsenabschnitts (117), eine zweite Aufnahme (151) zum Aufnehmen eines zweiten Dichtelements (153), insbesondere O-Ring, angeordnet ist.

8. Verbindungselement (105) nach Anspruch 7, wobei die erste und/oder zweite Aufnahme (147, 151) jeweils durch zumindest eine den ersten und/oder zweiten Endabschnitt (115-1, 117-1) zumindest abschnittsweise umlaufende Rippe begrenzt ist, oder wobei die erste und/oder zweite Aufnahme (147, 151) jeweils als eine Nut geformt ist.

9. Verbindungselement (105) nach einem der vorangehenden Ansprüche, wobei die Außenhülse (107) mehrteilig ausgebildet ist.

10. Verbindungselement (105) nach Anspruch 9, wobei die Außenhülse (107) eine erste Außenhülsenhälfte (155) und eine zweite Außenhülsenhälfte (157) umfasst, wobei die erste und zweite Außenhülsenhälfte (155, 157), insbesondere lösbar, insbesondere durch eine Rastverbindung, miteinander verbunden sind, um die Außenhülse (107) zu formen.

11. Verbindungselement (105) nach Anspruch 10, wobei die erste und/oder zweite Außenhülsenhälfte (155, 157) zumindest einen Rasthaken (159) aufweist, welcher in eine Einführöffnung (161) der zweiten und/oder ersten Außenhülsenhälfte (157, 155) eingreift, um die erste und zweite Außenhülsenhälften (155, 157) rastend miteinander zu verbinden; oder wobei das Verbindungselement (105) ein Halteelement (105) aufweist, wobei das Halteelement (105) eine Mehrzahl von Rastarmen (181, 183) aufweist, welche in Hinterschneidungen (185, 187) der ersten und/oder zweiten Außenhülsenhälfte (155, 157) eingreifen, um die erste und zweite Außenhülsenhälften (155, 157) rastend miteinander zu verbinden.

12. Verbindungselement (105) nach einem der vorangehenden Ansprüche, wobei an einem der ersten Öffnung (109) zugewandten ersten Endabschnitt (115-1) des ersten Innenhülsenabschnitts (115) ein erster Anschlag (115-2) geformt ist, welcher ausgebildet ist, um an einem ersten Gegenanschlag (101-3) der ersten Fluidleitung (101) anzuliegen und ein Einführen des ersten Leitungsendes (101-1) der ersten Fluidleitung (101) in die erste Aufnahmeöffnung (119) zu begrenzen, und/oder wobei an einem der zweiten Öffnung (111) zugewandten zweiten Endabschnitt (117-1) des zweiten Innenhülsenabschnitts (117) ein zweiter Anschlag (117-2) geformt ist, welcher ausgebildet ist, um an einem zweiten Gegenanschlag (103-3) der zweiten Fluidleitung (103) anzuliegen und ein Einführen des zweiten Leitungsendes (103-1) der zweiten Fluidleitung (103) in die zweite Aufnahmeöffnung (121) zu begrenzen.

13. Verbindungselement (105) nach einem der vorangehenden Ansprüche, wobei die Außenhülse (107), insbesondere die erste und/oder zweite Außenhülsenhälfte (155, 157) eine Mehrzahl von Stützrippen aufweist, wobei sich die Stützrippen insbesondere entlang einer Längsrichtung und/oder Umfangsrichtung der Außenhülse (107), insbesondere der ersten und/oder zweiten Außenhülsenhälfte (155, 157), erstrecken.

14. Fluidverbindungsanordnung (100), umfassend ein Verbindungselement (105) nach einem der vorangehenden Ansprüche, eine erste Fluidleitung (101) und eine zweite Fluidleitung (103),
wobei ein erstes Leitungsende (101-1) der ersten Fluidleitung (101) in der ersten Aufnahmeöffnung (119) bewegbar aufgenommen ist, wobei ein zweites Leitungsende (103-1) der zweiten Fluidleitung (103) in der zweiten Aufnahmeöffnung (121) bewegbar aufgenommen ist, um einen Toleranzausgleich zwischen der ersten und zweiten Fluidleitung (101, 103) sicherzustellen.

15. Fluidverbindungsanordnung (100) nach Anspruch 14, wobei das jeweilige Leitungsende (101-1, 103-1) der jeweiligen Fluidleitung (101, 103) innerhalb der jeweiligen Aufnahmeöffnung (119, 121) entlang einer axialen Richtung (123) der Verbindungselements (105) bewegbar aufgenommen ist, um ein Strecken und Stauchen der Fluidverbindungsanordnung (100) zu ermöglichen, und/oder
wobei das jeweilige Leitungsende (101-1, 103-1) der jeweiligen Fluidleitung (101, 103) innerhalb der jeweiligen Aufnahmeöffnung (119, 121) entlang einer radialen Richtung (125) der Verbindungselements (105) bewegbar aufgenommen ist, um einen Achsversatz zwischen der ersten und zweiten Fluidleitung (101, 103) zu ermöglichen, und/oder
wobei das jeweilige Leitungsende (101-1, 103-1) der jeweiligen Fluidleitung (101, 103) innerhalb der jeweiligen Aufnahmeöffnung (119, 121) abgewinkelbar angeordnet ist, um zu ermöglichen, dass die jeweiligen axialen Erstreckungsachsen (162-1, 162-2) der ersten und zweiten Fluidleitung (101, 103) winklig zueinander verlaufen.
